(19) Europäisches Patentamt
European Patent Office
Office européen des brevets

(11) **EP 4 189 346 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(21) Anmeldenummer: **21735247.5**

(22) Anmeldetag: **21.06.2021**

(51) Internationale Patentklassifikation (IPC):
**G01F 1/34** (2006.01)    **G01F 1/84** (2006.01)
**G01F 15/02** (2006.01)    **G01L 13/02** (2006.01)
**G01K 13/02** (2021.01)    **G01K 7/42** (2006.01)
**G01K 1/143** (2021.01)

(52) Gemeinsame Patentklassifikation (CPC):
**G01K 13/02; G01F 1/34; G01F 1/84; G01F 15/022; G01K 1/143; G01K 7/42; G01L 13/025**

(86) Internationale Anmeldenummer:
**PCT/EP2021/066756**

(87) Internationale Veröffentlichungsnummer:
**WO 2022/022890 (03.02.2022 Gazette 2022/05)**

(54) **VERFAHREN ZUM ERMITTELN EINER MESSSTOFF-TEMPERATUR SOWIE MESSSYSTEM DAFÜR**

METHOD FOR ASCERTAINING THE TEMPERATURE OF A SUBSTANCE TO BE MEASURED, AND MEASURING SYSTEM FOR THIS PURPOSE

PROCÉDÉ DE DÉTERMINATION DE TEMPÉRATURE D'UNE SUBSTANCE À MESURER ET SYSTÈME DE MESURE À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **29.07.2020   DE 102020120054**

(43) Veröffentlichungstag der Anmeldung:
**07.06.2023   Patentblatt 2023/23**

(73) Patentinhaber: **Endress+Hauser Flowtec AG**
**4153 Reinach (CH)**

(72) Erfinder:
• **ALIOLI, Mattia**
  **4102 Binningen (CH)**
• **KUMAR, Vivek**
  **4123 Allschwil (CH)**
• **RIEDER, Alfred**
  **84032 Landshut (DE)**
• **ECKERT, Gerhard**
  **79639 Grenzach-Wyhlen (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
**DE-A1- 102018 132 672**

• **NYARKO PETER: "Heat Load and its Effects on Fluid Friction Factor in Corrugated Pipes", AMERICAN JOURNAL OF SCIENTIFIC AND INDUSTRIAL RESEARCH, vol. 3, no. 4, 31 August 2012 (2012-08-31), pages 241 - 251, XP055844143, Retrieved from the Internet <URL:https://www.researchgate.net/profile/Peter-Nyarko/publication/271353101_Heat_Load_and_its_Effects_on_Fluid_Friction_Factor_in_Corrugated_Pipes/links/5b3370b0a6fdcc8506d1897f/Heat-Load-and-its-Effects-on-Fluid-Friction-Factor-in-Corrugated-Pipes.pdf> DOI: 10.5251/ajsir.2012.3.4.241.251**

- YU B. ET AL: "Pressure drop and heat transfer characteristics of turbulent flow in annular tubes with internal wave-like longitudinal fins", HEAT AND MASS TRANSFER, vol. 40, no. 8, 1 June 2004 (2004-06-01), Berlin/Heidelberg, XP055844177, ISSN: 0947-7411, Retrieved from the Internet <URL:https://link.springer.com/content/pdf/10.1007/s00231-003-0449-5.pdf> DOI: 10.1007/s00231-003-0449-5
- FARUQUI A.A. ET AL: "Velocity and temperature profiles of unstable liquid-liquid dispersions in vertical turbulent flow", CHEMICAL ENGINEERING SCIENCE, vol. 17, no. 11, 1 November 1962 (1962-11-01), GB, pages 897 - 907, XP055844328, ISSN: 0009-2509, Retrieved from the Internet <URL:https://www.sciencedirect.com/science/article/pii/0009250962870225/pdf?md5=f988a7d6a7120559fef9417696801883&pid=1-s2.0-0009250962870225-main.pdf> [retrieved on 20210924], DOI: 10.1016/0009-2509(62)87022-5

**Beschreibung**

Die Erfindung betrifft ein Verfahren zum Ermitteln einer Meßstoff-Temperatur, nämlich einer Temperatur eines in einer Leitung geführten Meßstoffs sowie ein entsprechendes Meßsystem.

In der US-A 2017/0074701, der US-A 2017/0074730, der WO-A 2017/131546 bzw. der WO-A 2015/099933 sind jeweils Meßsysteme bzw. Verfahren zum Ermitteln einer Meßstoff-Temperatur, nämlich einer Temperatur eines in einer Leitung, beispielsweise einem Rohr, strömenden Meßstoffs, beispielsweise eines Gas, einer Flüssigkeit oder einer Dispersion, gezeigt, wobei jeweils eine Temperatur einer das Lumen der Leitung umschließenden - typischerweise metallischen - Wandung (Wand-Temperatur) an einer dem Lumen abgewandten Oberfläche (Mantelfläche) mittels eines oder meheren Temperatursensoren erfaßt und anhand damit generierter Temperatur-Mesignale die Meßstoff-Temperatur repräsentierende Meßstoff-Temperaturwerte generiert, beispielsweise nämlich berechnet werden.

Zumindest einer der Temperatursensoren des jeweiligen Meßsystems ist mittels außerhalb der Leitung angeordneten, mithin im Betrieb nicht von dem im Lumen in der Leitung strömenden Meßstoff kontaktierten Temperaturfühler, ggf. auch einem nämlichen Temperaturfühler thermisch leitend mit der Wandung verbindenden Kopplungskörper, beispielsweise aus einem Wärmeleitkleber, gebildet. Der Temperatursensor ist jeweils zudem dafür eingerichtet, jeweils eine einer Temperatur an einer mittels des jeweiligen Temperaturfühlers gebildeten Temperaturmeßstelle entsprechende Wand-Temperatur jeweils in ein entsprechendes Temperatur-Meßsignal, nämlich eine die jeweilige Wand-Temperatur repräsentierendes elektrisches Meßsignal, beispielsweise mit einer von nämlicher Wand-Temperatur abhängigen elektrische Signalspannung und/oder einem von nämlicher Wand-Temperatur abhängigen elektrischen Signalstrom, zu wandeln. Der Temperaturfühler kann dementsprechend beispielsweise ein Platin-Meßwiderstand, ein Thermistor oder ein Thermoelement oder aber eine mittels mehrerer solcher temperaturempfindlichen elektrischen bzw. elektronischen Bauteilen gebildete elektrische Schaltung sein.

Jedes der vorbezeichneten Meßsysteme umfaßt ferner jeweils eine Meßsystem-Elektronik, die eingerichtet ist, das wenigstens eine Temperatur-Meßsignal zu empfangen sowie unter Verwendung nämlichen Temperatur-Meßsignals die Meßstoff-Temperaturwerte zu generieren. Typischerweise ist die Meßsystem-Elektronik dafür mittel entsprechender Verbindungsleitungen direkt an den wenigstensen einen Temperatursensor elektrisch angeschlossen. Bei in der industriellen Meß- und Automatisierungstechnik verwendeten Meßsystemen ist die Meßsystem-Elektronik zumeist mittels eines oder mehreren, ggf. auch als digitale Signalprozessoren (DSP) ausgebildeten Mikroprozessoren realisiert, derart, daß die Meßsystem-Elektronik die jeweiligen Temperatur-Meßwerte durch numerische Verrechnung von aus den Meßsignalen, nicht zuletzt des wenigstens einen Temperatur-Meßsignals gewonnenen, digitalen Abtatswerten ermittelt und inform von entsprechenden Digitalwerten bereitstellt. Zudem ist die Meßsystem-Elektronik typischerweise innerhalb wenigstens eines vergleichsweise robusten, insb. schlag-, druck-, und/oder wetterfesten, Elektronik-Gehäuse untergebracht. Das Elektronik-Gehäuse kann beispielsweise von der Leitung entfernt angeordnet oder auch aber auch in deren unmittelbarer Nähe angeordnet, ggf. auch an der Leitung fixiert sein. Die jeweilige Meßsystem-Elektronik kann zudem über entsprechende elektrische Leitungen auch an ein vom jeweiligen Meßsystem räumlich entfernt angeordnetes bzw. auch räumlich verteiltes übergeordnetes elektronisches Datenverarbeitungssystem elektrisch angeschlossen sein, an das die vom jeweiligen Meßsystem erzeugten Meßwerte mittels wenigstens eines diese entsprechend tragenden Meßwertesignals zeitnah, beispielsweise auch in Echtzeit, weitergegeben werden. Das Datenverarbeitungssystem kann beispielsweise mittels Speicherprogrammierbaren Steuerungen (SPS) und/oder in einer Leitwarte installierten Prozeß-Leitrechnern sowie mittels entsprechender Datenübertragungsnetzwerke, beispielsweise einem Feldbus-System und/oder einem Funknetz, gebildet sein. Weiterführende Beispiele für Meßsysteme zum Ermitteln einer Meßstoff-Temperatur mittels außen an einer den Meßstoff führenden Leitung angeordneten Temperatursensoren sind u.a. in der DE-A 10 2018 132672, der EP-A 919 793, der US-A 2008/0127745, der US-A 2008/0115577, der US-A 2011/0113896, der US-A 47 68 384, der US-B 70 40 179, der WO-A 95/08758, der WO-A 01/02816, der

WO-A 2009/051588, der WO-A 2009/134268, der WO-A 2012/018323, der WO-A 2012/033504, der WO-A 2012/067608 oder der WO-A 2012/115639 gezeigt.

Wie in der DE-A 10 2018 132 672, US-A 2017/0074701, der US-A 2017/0074730, EP-A 919 793, der US-A 2008/0127745, der US-A 2008/0115577, der US-A 2011/0113896, der US-A 47 68 384, der US-B 70 40 179, der WO-A 95/08758, der WO-A 01/02816, der WO-A 2009/051588, der WO-A 2009/134268, der WO-A 2012/018323, der WO-A 2012/033504, der WO-A 2012/067608 oder der WO-A 2012/115639 gezeigt können Meßsysteme der in Rede stehenden Art ferner auch eingerichtet sein, wenigstens eine von der Meßstoff-Temperatur abweichende weitere Meßgröße des in der Leitung strömenden Meßstoffs zu ermitteln, insb. nämlich diese repräsentierende Meßwerte zu generieren. Beispielsweise kann es sich bei einem solchen Meßsystem auch um ein dem Messen eines oder mehrerer Stoffparameter des Meßstoffs, wie etwa einer Dichte und/oder einer Viskosität, und/oder dem Messen eines oder mehrerer Strömungsparameter des Meßstoffs, beispielsweise eines Masse- und/oder Volumenstroms und/oder einer Strömunsggeschwindigkeit, dienlichen, mithin im Betrieb entsprechende Dichte-Meßwerte, Viskosität-Meßwerte, Massestrom-Meßwerte, Volumenstrom-Meßwerte und/oder Strömungsgeschwindigkeit erzeugendes vibronisches Meßsystem handeln. Aufbau und Wirkungsweise solcher, mittels eines die vorbezeichnete, typischerweise als (Metall-)Rohr ausgebildete, Leitung umfassenden Meßwandlers vom Vibrationstyp gebildeten - beispielsweise auch als Coriolis-Massestrom-Meßgeräte oder auch als Coriolis-Massestrom-/Meßsysteme ausgebildeten - vibronischen Meßsysteme sind dem Fachmann an und für sich bekannt und beispielsweise in der US-B 65 133 393, der US-B 66 51 513, der US-B 70 17 242, der US-B 74 06 878, der US-B 87 57 007, der US-B 86 71 776 bzw. der US-B 89 24 165 oder auch in den erwähnten US-A 2017/0074701, der US-A 2017/0074730, EP-A 919 793, der US-A 2008/0127745, der US-A 2008/0115577, der US-A 2011/0113896, der US-A 47 68 384, der US-B 70 40 179, der WO-A 01/02816, der WO-A 2009/051588, der WO-A 2009/134268, der WO-A 2012/018323, der WO-A 2012/033504, der WO-A 2012/067608 oder der WO-A 2012/115639 ausführlich und detailiert beschrieben. Bei derartigen vibronischen Meßsystemen ist Leitung im besonderen auch dafür eingerichtet, zum Messen des Stoff- und/oder Strömungsparmeters im Betrieb zumindest zeitweise auch vibrieren gelassen und während vom Meßstoff durchströmt zu werden. Typischerweise wird die Leitung dafür mittels wenigstens eines darauf einwirkenden elektro-mechanischen, beispielsweise mittels eines außen and er Leitung Rohr fixierten Permanentmagneten und mittels einer damit wechselwirkende Erregerspule gebildeten, Schwingungserregers des Meßwandlers aktiv zu Nutzschwingungen, nämlich mechanischen Schwingungen um eine der jeweiligen Leitung zugehörige statische Ruhelage angeregt, insb. auch solche mechanischen Schwingungen, die geeignet sind, im strömenden Meßstoff von dessen Massestrom abhängige Corioliskräfte zu induzieren, und/oder die geeignet sind, im strömenden Meßstoff von dessen Viskosität abhängige Reibungskräfte zu induzieren, und/oder die geeignet sind, im strömenden Meßstoff von dessen Dichte abhängige Trägheitskräfte zu induzieren. Zum Erfassen von mechanischen Schwingungen der Leitung, nicht zuletzt auch deren Nutzschwingungen, weist das jeweilige (vibronische) Meßsystem ferner jeweils wenigstens einen, beispielsweise elektrodynamischen, Schwingungssensor auf, der dafür eingerichtet ist wenigstens ein Schwingungssignal, nämlich ein Schwingungsbewegungen der Leitung repräsentierendes elektrisches Schwingungsmeßsignal, beispielsweise mit einer von einer Geschwindigkeit der Schwingungsbewegungen der Leitung abhängigen elektrische Signalspannung, zu wandeln. Die Meßsystem-Elektronik solcher vibronischer Meßsysteme ist - nicht zuletzt für den vorbezeichneten Fall, daß damit die Dichte des Meßstoffs repräsentierende Dichte-Meßwerte und/oder die Viskosität des Meßtstoffs repräsentierende Viskosität-Meßwerte generierte werden können - weiters dafür eingerichtet, Meßwerte auch unter Verwendung sowohl des wenigstens einen Temperaturmeßsignals als auch des wenigstens einen Schwingungssignals zu generieren, beispielsweise derart, daß die Meßsystem-Elektronik Dichte-Meßwerte und/oder Viskositäts-Meßwerte basierend auf einer anhand des Schwingungssignals gemessenen Nutzfrequenz, nämlich einer von dem zu messenden Stoffparameter abhängigen Schwingfrequenz der Nutzschwingungen ermittelt und dafür eine allfällige Abhängigkeit nämlicher Nutzfrequenz auch von einer momentanen Meßfluid-Temperatur meßtechnisch kompensiert. Neben der Auswertung der Temperaturmeßsignale sowie des wenigstens einen Schwingungssignals dient die Meßsystem-Elektronik solcher vibronischer Meßsysteme typischerweise auch dazu, wenigstens ein, beispielsweise harmonisches und/oder getaktetes, Treibersignal für den wenigstens einen elektro-mechanischen Schwingungserreger zu generieren. Nämliches Treibersignal kann beispielsweise hinsichtlich einer Stromstärke und/oder einer Spannungshöhe geregelt sein.

Weiterführende Untersuchungen haben gezeigt, daß mittels der vorbezeichneten Verfahren bzw. Meßsysteme ermittelte Meßstoff-Temperaturwerte schon bei vergleichsweise geringen Strömungsgeschwindigkeiten des in der Leitung strömenden Meßstoffs bei etwa 0,1 m·s⁻¹ und/oder bei vergleichsweise niedrigen Reynolds-Zahlen des in der Leitung strömenden Meßstoffs bei etwa 100 von der wahren bzw. tatsächlichen Meßstoff-Temperatur erheblich abweichen können, beispielsweise derart, daß Meßstoff-Temperaturwerte, die eine einer Temperatur eine im Zentrum des Lumens befindlichen Teilvolumen des Meßstoffs entsprechende Kerntemperatur des Meßstoffs repräsentieren, mehr als 4 K von nämlicher Kerntemperatur abweichen können; dies im besonderen auch bei einer Berücksichtigung von mittels zwei oder mehr Temperatursensoren erfaßten Wärmeströmen innerhalb der Wandung und/oder innerhalb einer die Leitung umhüllenden Atmosphäre, beispielsweise gemäß der erwähnten US-A 2017/0074701, der US-A 2017/0074730, US-A 2008/0127745, US-B 70 40 179, WO-A 2017/131546 oder WO-A 2015/099933.

Dem Rechnung tragend besteht eine Aufgabe der Erfindung darin, ein Verfahren anzugeben, das eine präzise Ermittlung einer Meßstoff-Temperatur eines in einer Leitung strömenden Meßstoffs, nicht zuletzt nämlich einer Kerntemperatur des Meßstoffs, basierend auf einer gemessenen Wand-Temperatur ermöglicht; dies im besonderen auch bei Strömungsgeschwindigkeiten des in der Leitung strömenden Meßstoffs von mehr als 0,1 m·s⁻¹ bzw. bei Reynolds-Zahlen des in der Leitung strömenden Meßstoffs von mehr als 100 und/oder auch derart, daß die ermittelte Meßstoff-Temperatur bzw. ein diese repräsentierender Meßstoff-Temperaturwert um weniger als 3 K, insb. auch weniger als 1 K, von der wahren Meßstoff-Temperatur abweicht. Darüberhinaus besteht eine weitere Aufgabe der Erfindung darin, ein zur Durchführung eines solchen Verfahrens geeignetes Meßsystem anzugeben.

Zur Lösung der Aufgabe besteht die Erfindung in einem Verfahren zum Ermitteln einer Meßstoff-Temperatur $T_M$ nach Anspruch 1 und einem Meßsystem nach Anspruch 20. Vorteilhafte Ausgestaltungen der Erfindung sind in den abhängigen Ansprüchen definiert.

Ein Grundgedanke der Erfindung besteht darin, eine durch Umwandlung kinetischer Energie des strömenden Meßstoffs in thermische Energie aufgrund von Reibungsvorgängen innerhalb des durch die Leitung strömenden Meßstoffs bzw. zwischen strömenden Meßstoff und Wandung der Leitung herbeigeführte (zusätzliche) Erwärmung des in der Leitung strömenden Meßstoffs anhand von weiteren Stoff- und Strömungsparametern des Meßstoffs, nämlich dessen Dichte, dessen Viskosität, dessen Temperaturleitfähigkeit, dessen Wärmekapazität sowie der der Druckdifferenz zu ermitteln und bei der Ermittlung der Meßstoff-Temperatur anhand der Wand-Temperatur entsprechend zu berücksichtigen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:

Fig. 1  schematisch ein Ausführungsbeispiel eines erfindungsgemäßen Meßsystems zum Messen einer Temperatur eines in der Leitung geführten fluiden Meßstoffs;

Fig. 2, 3  schematisch eine Variante eines erfindungsgemäßen Meßsystems gemäß Fig. 1; und

Fig. 4  schematisch eine weitere Variante eines erfindungsgemäßen Meßsystems.

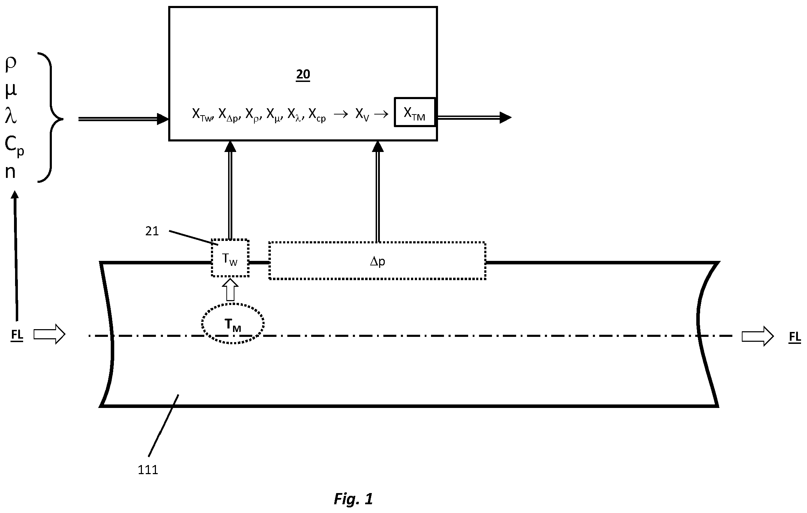

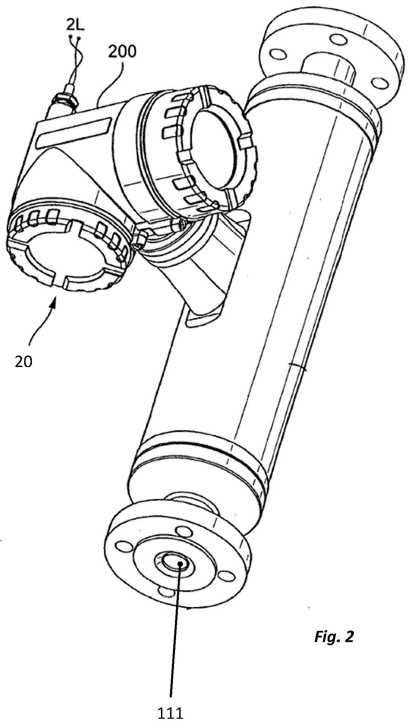

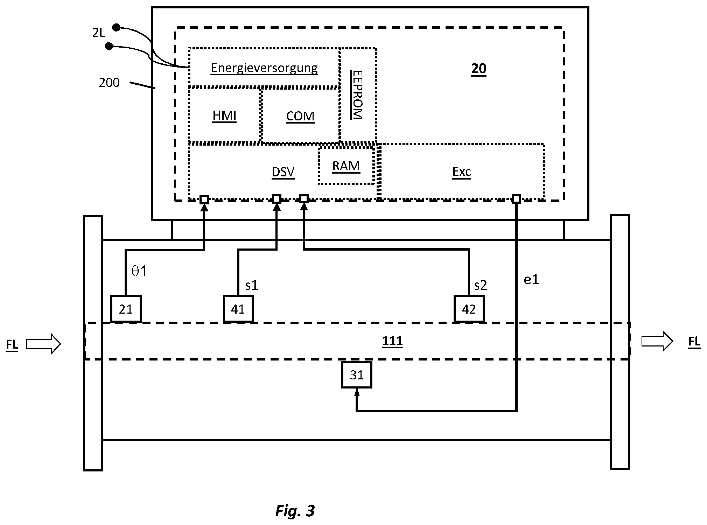

In Fig. 1, 2, 3 bzw. 4 ist jeweils schematisch eine (Fluid-)Leitung aufweisendes Meßsystem bzw. eine entsprechende (Meß-)Anordnung dargestellt, das dazu dient eine Meßstoff-Temperatur $T_M$, nämlich eine Temperatur eines in der Leitung 111 geführten fluiden Meßstoffs FL, beispielsweise ein Gase, eine Flüssigkeit oder eine Dispersion, zu ermitteln. Die Leitung 111 weist ein von einer, beispielsweise metallischen, Wandung umschlossenes Lumen auf und kann beispielsweise als ein (Metall-)Rohr ausgebildet sein. Bei der zu ermittelnden Meßstoff-Temperatur $T_M$ kann es sich beispielsweise um eine auf einer Längsachse des Lumens oder in deren Nähe verortete Kerntemperatur nämlichen Meßstoffs handeln. Nach einer Ausgestaltung der Erfindung besteht die Wandung der Leitung aus Metall, beispielsweise einem Stahl, einer Titan-Legierung, einer Tantal-Legierung oder einer Zirkonium-Legierung, und/oder weist die Wandung der Leitung eine Wandstärke auf, die nicht weniger als 0,5 mm, beispielsweise auch mehr als 1 mm, und/oder nicht mehr als 5 mm, beispielsweise auch weniger als 3 mm, beträgt. Die Leitung kann ferner beispielsweise Bestandteil eines (Rohr-) Leitungssystems und/oder eines der Ermittlung der Temperatur $T_M$ dienlichen, beispielsweise auch eines vibronischen und/oder in den Verlauf einer Rohrleitung einsetzbaren, Meßsystems, sein. Dementsprechend kann das Meßsystem, wie auch in Fig. 2 bzw. 3 gezeigt, beispielsweise auch mittels eines der in den eingangs erwähnten EP-A 919 793, US-A 2008/0127745, US-A 2008/0115577, US-A 2011/0113896,

US-A 2017/0074701, US-A 2017/0074730, US-A 47 68 384, US-B 65 133 393, der US-B 66 51 513, der US-B 70 17 242, US-B 70 40 179, der US-B 74 06 878, US-B 87 57 007, US-B 86 71 776,

US-B 89 24 165, WO-A 95/08758, WO-A 01/02816, WO-A 2009/051588, WO-A 2009/134268, WO-A 2012/018323, WO-A 2012/033504, WO-A 2012/067608, WO-A 2012/115639,

WO-A 2015/099933 bzw. WO-A 2017/131546 gezeigten bzw. auch als Meßgerät in Kompaktbauweise ausgebildeten und/oder vibronischen, industriellen Meßsystems gebildet sein, das wiederum entsprechend eingerichtet ist, im Betrieb den Meßstoff bzw. Teilvolumen davon zu führen, bzw. kann die Leitung Bestandteil eines Differenzdruck-Meßgeräts und/oder eines Coriolis-Massedurchfluß-Meßgeräts, insb. auch eines Coriolis-Massedurchfluß-/Dichte-Meßgeräts, eines Coriolis-Massedurchfluß-/Dichte-/Viskositäts-Meßgeräts, eines Coriolis-Massedurchfluß-/Dichte-/Differenzdruck-Meßgeräts oder eines Coriolis-Massedurchfluß-/Dichte-/Viskositäts-/Differenzdruck-Meßgeräts, sein.

Zur Ermittlung der Meßstoff-Temperatur $T_M$ wird erfindungsgemäß der Meßstoff durch die Leitung in einer vorgegebenen Strömungsrichtung, beispielsweise mit einer Strömungsgeschwindigkeit U von mehr als 0,1 m/s und/oder mit einem Massestrom $\dot{m}$ von mehr als 0,01 kg·s$^{-1}$, strömen gelassen und wird, wie in Fig. 1 schematisch gezeigt, wenigsten ein eine Wand-Temperatur $T_w$, nämlich ein Temperatur der Wandung repräsentierender, beispielsweise auch digitaler,

Wand-Temperaturwert $X_{Tw}$ ermittelt. Bei der zu ermittelnden Wand-Temperatur $T_w$ kann es sich beispielsweise um eine Oberflächentemperatur, nämlich eine Temperatur der Wandung an einer dem Lumen abgewandten Oberfläche (Mantelfläche) der Wandung oder beispielsweise eine Temperatur innerhalb der Wandung bzw. eine Temperatur an einer dem Lumen zugewandten Oberfläche (Innenfläche) der Wandung handeln. Alternativ oder in Ergänzung kann es sich bei der der zu ermittelnden Wand-Temperatur $T_w$ beispielsweise auch um die (Wand-)Temperatur eines hohlzylindrischen Segments der Wandung der Leitung handeln. Dementsprechend repräsentiert der Wand-Temperaturwert $X_{Tw}$ nach einer weiteren Ausgestaltung der Erfindung die Wand-Temperatur $T_w$, beispielsweise nämlich die Oberflächentemperatur, eines hohlzylindrischen Segments der Wandung und/oder wird zum Ermitteln des wenigstens Wand-Temperaturwerts $X_{Tw}$ nach einer weiteren Ausgestaltung der Erfindung eine Oberflächentemperatur der Wandung erfaßt. Nach einer weiteren Ausgestaltung der Erfindung ist ferner vorgesehen, die Wand-Temperatur $T_w$, beispielsweise nämlich die Oberflächentemperatur der Wandung und/oder die Temperatur an einem hohlzylindrischen Segment der Wandung, mittels eines Temperatursensors 21 zu erfassen und in ein einer Änderung nämlicher (Wand-)Temperatur mit einer Änderung wenigstens eines Signalparameters folgendes, beispielsweise elektrische, Temperatur-Meßsignal θ1 zu wandeln, insb. auch nämliches Temperatur-Meßsignal θ1 auch zum Ermitteln des wenigstens einen Wand-Temperaturwerts $X_{Tw}$ zu verwenden. Im besonderen ist hierfür ferner vorgesehen, einen mit einer Mantelfläche der Wandung thermisch gekoppelten, beispielsweise nämlich stoffschlüssig oder kraftschlüssig an der Wandung befestigten, Temperatursensor zum Erzeugen des Temperatur-Meßsignals θ1 zu verwenden.

Unvermeidliche Reibungsvorgängen innerhalb des durch die Leitung strömenden Meßstoffs oder auch zwischen strömenden Meßstoff und Wandung der Leitung führen dazu, daß kinetische Energie des strömenden Meßstoffs in thermische Energie überführt wird, mithin durch Dissipation eine (zusätzliche) Erwärmung des in der Leitung strömenden Meßstoffs, beispielsweise nämlich in einem nahe der Wandung verorteten Teilvolumen des strömenden Meßstoffs, herbeigeführt; dies regelmäßig in der Weise, daß entlang ein und desselben Radius der Leitung zwischen Wand-Temperatur und Meßstoff-Temperatur eine Temperatur-Differenz etabliert ist und/oder daß die Wand-Temperatur $T_W$ höher ist als die eigentlich zu messende

Meßstoff-Temperatur $T_M$ ($T_M < T_W$) ist. Nicht zuletzt für den vorbezeichneten Fall, daß die zu ermittelnde Meßstoff-Temperatur $T_M$ eine Kerntemperatur des Meßstoffs ist, kann die vorbezeichnete Dissipation dazu führen, daß diese tatsächlich um mehr als 1 K niedriger ist als die (gemessene) Wand-Temperatur $T_W$. Besonders ausgeprägt können die vorbezeichneten Reibungsvorgängen u.a. auch für den Fall sein, daß der in der Leitung strömende Meßstoff eine Strömungsgeschwindigkeit U aufweist, die größer als $0,1\,m\cdot s^{-1}$, insb. größer als $1\,m\cdot s^{-1}$, ist und/oder daß der in der Leitung strömende Meßstoff einen Massenstrom $\dot{m}$ aufweist, der größer als $0,01\,kg\cdot s^{-1}$, beispielsweise auch größer als $0,1\,kg\cdot s^{-1}$, ist, und/oder daß der in der Leitung strömenden Meßstoff FL eine Reynolds-Zahl Re aufweist, die größer als 100, insb. nämlich auch größer als 1000, ist. Bei der Reynolds-Zahl Re des in der Leitung strömenden Meßstoffs handelt es sich um eine dimensionslose Kenngröße für Fluide, die bekanntermaßen als ein Verhältnis zwischen Trägheits- zu Zähigkeitskräften im strömenden Fluid definiert ist und die einer u.a. auch von einer charakteristischen Länge L bzw. A abhängigen Berechnungsformel:

$$Re = \frac{\rho \cdot U \cdot L}{\mu} = \frac{\dot{m}}{A \cdot \mu} \qquad\qquad (1)$$

entspricht. Darüberhinaus konnten die vorbezeichneten Reibungsvorgängen im besonderen auch bei solchen Meßstoffen beobachtet werden, bei denen eine spezifische Wärmekapazität $c_p$ nicht weniger als $1\,kJ\cdot kg^{-1}\cdot K^{-1}$ beträgt und/oder bei denen Temperaturleitfähigkeit λ nicht weniger als $0,1\,W\cdot m^{-1}\cdot K^{-1}$ beträgt und/oder bei denen eine Viskosität μ, größer als 1 mPa·s, insb. nämlich größer als 10 mPa·s, ist und/oder bei denen eine Dichte ρ größer als $500\,kg\cdot m^{-3}$ ist.

Den vorbezeichneten Reibungsvorgängen bzw. der damit einhergehenden Disspation Rechnung tragend werden für die erfindungsgemäße Ermittlung der Meßstoff-Temperatur $T_M$ daher desweiteren wenigstens ein eine Dichte ρ des in der Leitung strömenden Meßstoffs repräsentierender Dichtewert $X_\rho$, wenigstens ein eine Viskosität μ, insb. eine effektive dynamische Viskosität, des in der Leitung strömenden Meßstoffs, repräsentierender Viskositätswert $X_\mu$, wenigstens ein eine Temperaturleitfähigkeit λ des Meßstoffs, repräsentierenden Temperaturleitfähigkeitswert $X_\lambda$, we-nigstens ein eine spezifische Wärmekapazität $c_p$ des Meßstoffs repräsentierenden Wärmekapazitätwert $X_{cp}$ sowie wenigstens eines eine innerhalb des in der Leitung strömenden Meßstoffs in Strömungsrichtung etablierte Druckdifferenz Δp, insb. nämlich eine Differenz zwischen einem im strömenden Meßstoff etablierten ersten statischen Druck p1 und einem stromabwärts des ersten statischen Drucks p1 im strömenden Meßstoff etablierten zweiten statischen Druck p2, repräsentierenden Druckdifferenzwerts $X_{\Delta p}$ ermittelt. Die Viskosität μ des Meßstoffs kann allgemein beispielsweise auch als eine effektive Viskosität μ definiert bzw. ermittelt werden, derart, daß sie einer von einer Konsistenz K des in der Leitung strömenden Meßstoffs, einer Schergeschwindigkeit $\dot{\gamma}$ des in der Leitung strömenden Meßstoffs sowie einem Fließindex n des in der Leitung strömenden Meßstoffs abhängigen Berechnungsformel:

$$\mu = K \cdot \dot{\gamma}^{n-1} \cdot \left(\frac{3n+1}{4n}\right)^n \cdot 8^{n-1} \qquad\qquad (2)$$

entspricht, wobei die Konsistenz K des in der Leitung strömende Meßstoff wiederum als ein Verhältnis zwischen einer Schubspannung $\tau$ im Meßstoff und einer Schergeschwindigkeit $\dot{\gamma}$ im Meßstoff definiert ist, mithin einer Berechnungs-vorschrift:

$$K = \frac{\tau}{\dot{\gamma}} \qquad\qquad (3)$$

entspricht.

Bei den vorbezeichneten Dichtewerten $X_\rho$, Viskositätswerten $X_\mu$, Temperaturleitfähigkeitswerten $X_\lambda$, Wärmekapazitätwerten $X_{cp}$ und/oder Druckdifferenzwerten $X_{\Delta p}$ kann es sich beispielsweise zudem jeweils auch um digtale Werte bzw. digitale Meßwerte handeln. Für den vorbezeichneten Fall, daß das Meßsystem mittels eines Coriolis-Massedurchfluß-Meßgeräts gebildet bzw. als Bestandteil eines solchen Coriolis-Massedurchfluß-Meßgeräts ausgebildet ist, kann nämliches Coriolis-Massedurchfluß-Meßgerät ferner eingerichtet sein, den vorbezeichneten Dichtewert $X_\rho$ zu ermitteln und/oder kann das Coriolis-Massedurchfluß-Meßgerät eingerichtet sein, den vorbezeichneten Viskositätswert $X_\mu$ zu ermitteln und/oder kann das Coriolis-Massedurchfluß-Meßgerät eingerichtet sein, den vorbezeichneten Druckdifferenzwerts $X_{\Delta p}$ zu ermitteln. Die Verwendung eines solchen Meßsystems hat u.a. auch den Vorteil, daß der Dichtewert $X_\rho$ so präzise ermittelt werden kann, daß er von der (wahren bzw. tatsächlichen) Dichte $\rho$ des Meßstoffs um nicht mehr als 0,5% der Dichte $\rho$ ($f_\rho < 0,5\%$) abweicht, bzw. daß der Druckdifferenzwert $X_{\Delta p}$ so präzise ermittelt werden kann, daß er von der (wahren bzw. tatsächlichen) Druckdifferenz $\Delta p$ um nicht mehr als 15% der Druckdifferenz $\Delta p$ ($f_{\Delta p} < 15\%$) abweicht, und/oder daß der Viskositätswert $X_\mu$ von der (wahren bzw. tatsächlichen) Viskosität $\mu$ des Meßstoffs um nicht mehr als 15% der Viskosität $\mu$ ($f_\mu < 15\%$) abweicht. Für den anderen erwähnten Fall, daß das Meßsystem mittels eines Differenzdruck-Meßgeräts gebildet bzw. als Bestandteil eines solchen Differenzdruck-Meßgeräts ausgebildet ist, kann nämliches Differenzdruck-Meßgerätbeispielsweise auch alternativ oder in Ergänzung zum vorbezeichneten Coriolis-Massedurchfluß-Meßgerät - dazu verwendet werden, den Druckdifferenzwert $X_{\Delta p}$ zu ermitteln. Die Verwendung eines solchen Meßsystems hat u.a. auch den Vorteil, daß der Druckdifferenzwert $X_{\Delta p}$ so präzise ermittelt werden kann, daß er von der (wahren bzw. tatsächlichen) Druckdifferenz $\Delta p$ um nicht mehr als 5% der Druckdifferenz $\Delta p$ ($f_{\Delta p} < 5\%$) abweicht. Der für den jeweiligen Meßstoff spezifische Temperaturleitfähigkeitswert $X_\lambda$ und/oder Wärmekapazitätwert $X_{cp}$,ggf. auch der vorbezeichnete Fließindex n, wiederum kann beispielsweise vorab entsprechend ermittelt und/oder in Kenntnis des jeweils vorliegenden Meßstoffs aus einer spezifische Temperaturleitfähigkeitswerte ($X_\lambda$) bzw. Wärmekapazitätwerte ($X_{cp}$), ggf. auch Fließindizes (n) einem jeweiligen Meßstoff zuordnenden (Werte-)Tabelle ausgelesen werden, ggf. auch wiederkehrend, beispielsweise nämlich regelmäßig und/oder auf Grund einer Änderung oder eines Wechsels des Meßstoffs in der Leitung.

Erfindungsgemäß werden zudem der Dichtewert $X_\rho$, der Viskositätswert $X_\mu$, der Druckdifferenzwert $X_{\Delta p}$, der Temperaturleitfähigkeitswert und der Wärmekapazitätwert ferner dazu verwendet, wenigstens einen Kennzahlenwert $X_V$ für eine Meßstoff-Kennzahl V zu ermitteln, die eine durch Dissipation herbeigeführte Erwärmung des in der Leitung strömenden Meßstoffs, beispielsweise in einem nahe der Wandung verorteten Teilvolumen des strömenden Meßstoffs, charakterisiert. Zur Verarbeitung des Dichtewerts $X_\rho$, des Viskositätswerts $X_\mu$, des Druckdifferenzwerts $X_{\Delta p}$, Temperaturleitfähigkeitswerts sowie des Wärmekapazitätwerts $X_{cp}$ bzw. für die Berechnung des Kennzahlenwerts $X_V$ kann das Meßsystem ferner eine entsprechende, beispielsweise digitale Mewerte erzeugenden und/oder mittels eines Mikroprozessors gebildete, (Meßsystem-)Elektronik 20 aufweisen, die beispielsweise wiederum in einem separaten (Elektronik-)Schutzgehäuse 200 untergebracht sein kann. Nämliches (Elektronik-)Schutzgehäuse 200 kann beispielsweise schlag- und/oder explosionsfest ausgebildet und/oder dafür eingerichtet sein, die (Meßsystem-)Elektronik vor Staub und/oder Spritzwasser zu schützen. Erfindungsgemäß ist die (Meßsystem-)Elektronik 20 dafür eingerichtet, den wenigstens einen Meßstoff-Temperaturwert $X_{TM}$ zu ermitteln.

Die (Meßsystem-)Elekronik 20 kann ferner beispielsweise einen nicht-flüchtigen Datenspeicher (EEPROM) zum Speichern von digitalen Daten, insb. auch digitalen (Meß-)Werten, aufweisen. Nämlicher Datenspeicher ist nach einer weiteren Ausgestaltung der Erfindung dafür eingerichtet, den wenigstens einen Temperaturleitfähigkeitswert $X_\lambda$ und/oder den wenigstens einen Wärmekapazitätwert $X_{cp}$ abzuspeichern. Dementsprechend kann im Datenspeicher auch die vorbezeichnete (Werte-)Tabelle für spezifische Temperaturleitfähigkeitswerte und/oder die spezifischen Wärmekapazitätwert und/oder der für Fließindizes gespeichert sein, derart daß einem Eintrag für einen bestimmten Meßstoff wenigsten ein jeweiliger spezifischer Temperaturleitfähigkeitswerte ($X_\lambda$) und/oder wenigsten ein jeweiliger spezifischer Wärmekapazitätwert ($X_{cp}$) und/oder ein jeweiliger Fließindex (n) zugeordnet und für die Berechnung des Kennzahlenwerts $X_V$ jeweils auslesbar ist. Darüberhinaus können im nicht-flüchtigen Datenspeicher auch der wenigstens eine Wand-Temperaturwert $X_{Tw}$, der wenigstens eine Dichtewert $X_\rho$, der wenigstens eine Viskositätswert $X_\mu$ und/oder der wenigstens eine Druckdifferenzwert $X_{\Delta p}$ gespeichert werden und/oder kann im nicht-flüchtigen Datenspeicher auch der wenigste eine Kennzahlenwert $X_V$ und/oder der wenigstens eine Meßstoff-Temperaturwert $X_{TM}$ (zwischen-)gespeichert werden. Für den vorbezeichneten Fall, daß ein Temperatursensor 21 zum Erfassen der Wand-Temperatur $T_w$ und zum Erzeugen des diese repräsentierenden Temperatur-Meßsignals $\theta 1$ vorgesehen ist, kann die (Meßsystem-)Elektronik 20 auch elektrisch an den Temperatursensor angeschlossen sein, beispielsweise mittels elektrischer Verbindungsgleitung, und kann die (Meßsystem-)Elektronik 20 zudem dafür eingerichtet sein, nämliches Temperatur-Meßsignal $\theta 1$ zu empfangen und auszuwerten, beispielsweise nämlich zu digitalisieren und/oder anhand Temperatur-Meßsignals $\theta 1$ den Wand-Temperaturwert $X_{Tw}$ zu ermitteln. Für den anderen vorbezeichneten Fall, daß das Meßsystem mittels eines Coriolis-Massedurchfluß-Meßgeräts gebildet ist, kann die (Meßsystem-)Elektronik 20 zudem gleichermaßen wie die Leitung Bestandteil nämlichen Coriolis-Massedurchfluß-Meßgeräts sein, oder für den erwähnten Fall, daß das Meßsystem mittels eines Differenzdruck-Meßgeräts gebildet ist, kann die (Meßsystem-)Elektronik 20 auch Bestandteil nämlichen Differenzdruck-Meßgeräts sein.

Die vorbezeichnete Meßstoff-Kennzahl V entspricht erfindungsgemäß einer sowohl durch eine Eckert-Zahl Ec des in der Leitung strömenden Meßstoffs, eine Prandtl-Zahl Pr des in der Leitung strömenden Meßstoffs sowie einen Druckverlustkoeffizienten $\zeta$ der Leitung als auch durch einen leitungsspezifischen ersten Exponenten a, einen leitungsspezifischen zweiten Exponenten b sowie einen leitungsspezifischen dritten Exponenten c bestimmten Berechnungsformel:

$$V = f\big(\Delta p, \rho, \mu, \lambda, c_p\big) = Pr^{a} \cdot Ec^{b} \cdot \zeta^{c} \qquad (4).$$

Typischerweise beträgt der Exponent a mehr als 0,1 und weniger als 0,5, insb. nämlich 0,3. Der Exponent b und der Exponent c wiederum können jeweils mehr als 0,8 und weniger als 1,2, beispielsweise nämlich einander gleich sein und/oder jeweils 1 betragen.

Unter Verwendung sowohl des vorbezeichneten Wand-Temperaturwerts $X_{Tw}$ als auch des ermittelten Kennzahlenwerts $X_V$ wird erfindungsgemäß hernach wenigstens ein die Temperatur $T_M$ des Meßstoffs, beispielsweise nämlich dessen Kerntemperatur, repräsentierender Meßstoff-Temperaturwert $X_{TM}$ ermittelt; dies beispielsweise derart, daß der Meßstoff-Temperaturwert $X_{TM}$ eine u.a sowohl vom Kennzahlenwert $X_V$ als auch dem Wand-Temperaturwert $X_{Tw}$ abhängige Berechnungsvorschrift:

$$X_{TM} = X_{TW} - (k1 \cdot X_V + k2) = X_{TW} - X_{\Delta T} \qquad (5)$$

erfüllt. Die vorbezeichnete Berechnungsvorschrift für den Wand-Temperaturwert $X_{Tw}$ kann ferner durch einen leitungsspezifischen ersten Koeffizienten k1 und einen leitungsspezifischen zweiten Koeffizienten k2 parametrisiert sein. Nämliche Koeffizienten k1, k2 können für ein jeweiliges Meßsystem vorab, beispielsweise im Zuge einer Kalibrierung unter Referenzbedingungen, ermittelte (Kalibrier-)Konstanten sein, wobei der Koeffizient k1 typischerweise nicht weniger als 0,5 K (Kelvin) und nicht mehr als 1,5 K beträgt und/oder wobei der Koeffizient k2 typischerweise nicht weniger **als -0,2** K und nicht mehr als 0,2 K beträgt, ggf. nämlich auch gleich Null gesetzt werden kann. Nach einer weiteren Ausgestaltung der Erfindung sind der Kennzahlenwert $X_V$ sowie die leitungsspezifischen ersten und zweiten Koeffizienten k1, k2 so bemessen, daß insb. bei strömendem Meßstoff und/oder für den Fall, daß der Meßstoff-Temperaturwert $X_{TM}$ eine Kerntemperatur des Meßstoffs repräsentiert, der Meßstoff-Temperaturwert $X_{TM}$ kleiner ist als der Wand-Temperaturwert $X_{Tw}$ ($X_{TM} < X_{Tw}$).

Bei der Prandtl-Zahl Pr des in der Leitung strömenden Meßstoffs handelt es sich um eine dimensionslose Kenngröße für Fluide, die bekanntermaßen als ein Verhältnis zwischen Viskosität $\mu$ und Temperaturleitfähigkeit $\lambda$ definiert ist, mithin einer Berechnungsformel:

$$Pr = \frac{c_p}{\lambda} \cdot \mu \qquad (6)$$

oder bei Verwendung der effektiven Viskosität dementsprechend einer Berechnungsformel:

$$Pr = \frac{c_p}{\lambda} \cdot K \cdot \dot{\gamma}^{n-1} \cdot \left(\frac{3n+1}{4n}\right)^{n} \cdot 8^{n-1} \qquad (7)$$

entspricht. Die Eckert-Zahl Ec des in der Leitung strömenden Meßstoffs ist ebenfall ein dimensionslose Kenngröße für Fluide, die als ein Verhältnis einer kinetischen Energie des strömenden Meßstoffs und einer zwischen nämlichem Meßstoff und der Wandung etablierten Entalpiedifferenz definiert ist bzw. einer Berechnungsformel:

$$Ec = \frac{U^2}{c_p \cdot \Delta T} \qquad (8).$$

entspricht, wobei für die erfindungsgemäße Ermittlung der Meßstoff-Temperatur $T_M$ die dafür anzusetzende Temperaturdifferenz $\Delta T$ ohne weiteres als konstant angenommen, beispielsweise auf 1 K festgesetzt werden kann, so daß die Eckert-Zahl Ec auch einer vereinfachten Berechnunsgformel:

$$Ec = k3 \cdot \frac{U^2}{c_p} \qquad (9)$$

entsprechen kann, beispielsweise mit k3 = 1 K⁻¹. Gleichermaßen dimensionslos ist auch der vorbezeichnete Druckverlustkoeffizient $\zeta$ des in der Leitung strömenden Meßstoffs. Vorliegend handelt es sich um ein Maß für einen Druckverlust in bzw. entlang der durchströmten Leitung, wobei der - gelegentlich auch als Druckverlust- oder Widerstandsbeiwert bezeichnete - Druckverlustkoeffizient $\zeta$ einer Berechnungsformel:

$$\zeta = \frac{\Delta p}{0{,}5 \cdot \rho \cdot U^2} \tag{10}$$

entspricht. Demenstprechd kann die Meßstoff-Kennzahl V also durch eine Berechnungsformel:

$$V = \left(\frac{c_p}{\lambda} \cdot \mu\right)^a \cdot \left(\frac{U^2}{c_p \cdot \Delta T}\right)^b \cdot \left(\frac{\Delta p}{0{,}5 \cdot \rho \cdot U^2}\right)^c = \left(\frac{c_p}{\lambda} \cdot \mu\right)^a \cdot \left(k3 \cdot \frac{U^2}{c_p}\right)^b \cdot \left(2 \cdot \frac{\Delta p}{\rho \cdot U^2}\right)^c \tag{11}$$

definiert werden.

Zur Ermittlung der Kennzahlenwert $X_V$ wird nach einer weiteren Ausgestaltung der Erfindung daher ferner auch wenigstens ein Geschwindigkeitswert $X_U$ ermittelt, der eine, beispielsweise mittlere oder größte, Strömungsgeschwindigkeit U des in der Leitung strömenden Meßstoffs repräsentiert und wird der Kennzahlenwert $X_V$ basierend auf der vorbezeichneten Berechnungformel (11) ermittelt, derart, daß der Kennzahlenwert $X_V$ eine Berechnungsvorschrift:

$$X_V = \left(\frac{X_{cp} \cdot X_\mu}{X_\lambda}\right)^a \cdot \left(k3 \cdot \frac{X_U^2}{X_{cp}}\right)^b \cdot \left(2 \cdot \frac{X_{\Delta p}}{X_\rho \cdot X_U^2}\right)^c \tag{12}$$

erfüllt, wobei ein leitungsspezifischer dritter Koeffizienten k3 mit der vorbezeichneten Temperaturdifferenz $\Delta T$ korrespondiert (k3 = $\Delta T^{-1}$ = $k_{Ec}$).

Für den bereits erwähnten typischen Fall, daß der Exponent b gleich dem Exponent c gesetzt werden kann, entspricht die Meßstoff-Kennzahl V entsprechend auch einer im Vergleich zur Berechnungsformel (11) vereinfachten, insb. nämlich von der Strömungsgeschwindigkeit U unabhängigen, Berechnungsformel:

$$V = \left(\frac{c_p}{\lambda} \cdot \mu\right)^a \cdot \left(k3 \cdot \frac{\Delta p}{0{,}5 \cdot \rho \cdot c_p}\right)^b \tag{13},$$

beispielsweise nämlich auch einer weiter vereinfachten Berechnungsformel

$$V = \left(\frac{c_p}{\lambda} \cdot \mu\right)^a \cdot k3 \cdot \frac{\Delta p}{0{,}5 \cdot \rho \cdot c_p} \tag{14},$$

bzw. kann die Meßstoff-Kennzahl V durch ein der vereinfachten Berechnungsformeln (13) bzw. (14) definiert werden. Basierend darauf kann der Kennzahlenwert $X_V$ somit auch in der Weise ermittelt werden, daß er eine - im Vergleich zur vorbezeichneten Berechnungvorschrift (12) einfachere - Berechnungsvorschrift:

$$X_V = \left(\frac{X_{cp}}{X_\lambda} \cdot X_\mu\right)^a \cdot \left(k3 \cdot \frac{2 \cdot X_{\Delta p}}{X_\rho \cdot X_{cp}}\right)^b \tag{15}$$

bzw.

$$X_V = \left(\frac{X_{cp}}{X_\lambda} \cdot X_\mu\right)^a \cdot k3 \cdot \frac{2 \cdot X_{\Delta p}}{X_\rho \cdot X_{cp}} \tag{16},$$

beispielsweise nämlich

$$X_V = \left(\frac{X_{cp}}{X_\lambda} \cdot X_\mu\right)^{0,3} \cdot k3 \cdot \frac{2 \cdot X_{\Delta p}}{X_\rho \cdot X_{cp}} \tag{17},$$

erfüllt.

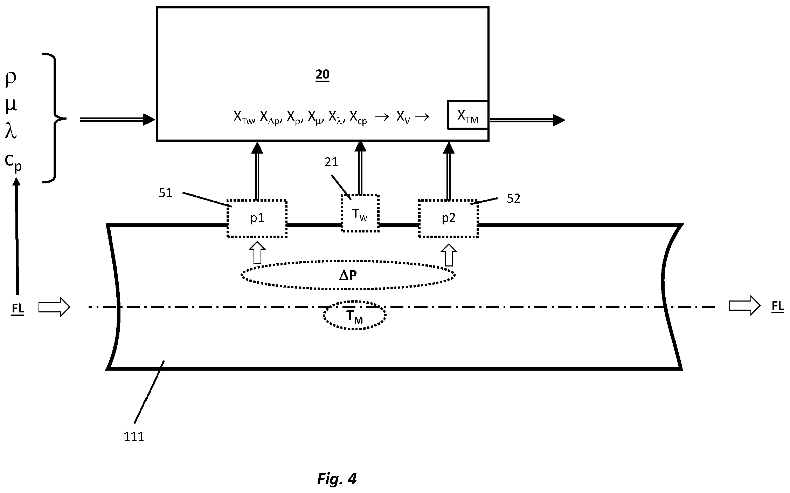

Nach einer weiteren Ausgestaltung der Erfindung ist ferner vorgesehen, einen im in der Leitung 111 strömenden Meßstoff FL etablierten ersten statischen Druck p1 sowie einen in Strömungsrichtung stromabwärts davon im strömenden Meßstoff etablierten zweiten statischen Druck p2 zu erfassen und zudem zumindest den Druckdifferenzwert $X_{\Delta p}$, beispielsweise auch den Viskositätswert $X_\mu$ und/oder den vorbezeichneten Geschwindigkeitswert $X_U$, anhand der erfaßten ersten und zweiten statischen Drücke zu ermitteln. Das Erfassen der ersten und zweiten statischen Drücke p1, p2 bzw. der Druckdifferenz Δp (Δp = p1-p2) kann, wie auch in Fig. 4 angedeutet, beispielsweise mittels zweier in Strömungsrichtung voneinander beabstandet in die Wandung der Leitung eingelassenen Drucksensoren 51, 52 erfolgen, die beispielsweise elektrisch an die vorbezeichnete (Meßsystem-)Elektronik 20 angeschlossen und/oder auch Bestandteil des vorbezeichneten Differenzdruck-Meßgeräts sein können. Demenstprechend kann die (Meßsystem-)Elektronik 20 ferner auch eingerichtet sein, den Druckdifferenzwert $X_{\Delta p}$, beispielsweise auch den Viskositätswert $X_\mu$ und/oder den vorbezeichneten Geschwindigkeitswert $X_U$, unter Verwendung von mittels der vorbezeichneten Drucksensoren generierten, ggf. auch digitalen Druckmeßsignalen zu ermitteln.

Wie u.a. in der eingang erwähnten der US-B 87 57 007, der US-B 86 71 776 bzw. der US-B 89 24 165 erörtert kann der vorbezeichnete Druckverlustkoeffizient ζ des in der Leitung strömenden Meßstoffs auch einer Berechnungsformel:

$$\zeta = k41 + k42 \cdot Re^{k43} \tag{18},$$

entsprechen bzw. entspricht die Druckdifferenz Δp auch einer Berechnungsformel:

$$\Delta p = (k41 + k42 \cdot Re^{k43})^{k52} \cdot k51 \cdot \frac{\dot{m}^2}{\rho} \tag{19}$$

bzw. unter Berücksichtigung der vorbezeichneten Berechnungsformel (1) beispielsweise auch einer Berechnungsformel:

$$\Delta p = \left[k41 + k42 \cdot \left(\frac{\dot{m}}{A \cdot \mu}\right)^{k43}\right]^{k52} \cdot k51 \cdot \frac{\dot{m}^2}{\rho} \tag{20}.$$

Darüberhinaus kann der Druckdifferenzwert $X_{\Delta p}$ anhand des Massestroms $\dot{m}$, der Dichte ρ sowie der Viskosität μ und/oder der Reynoldszahl Re des strömenden Meßstoffs ermittelt werden bzw. kann die Meßstoff-Kennzahl V also auch durch eine Berechnungsformel:

$$V = \left(\frac{c_p}{\lambda} \cdot \mu\right)^a \cdot \left(k_{Ec} \cdot \frac{U^2}{c_p}\right)^b \cdot \left(\frac{2}{\rho \cdot U^2} \cdot \left[k41 + k42 \cdot \left(\frac{\dot{m}}{A \cdot \mu}\right)^{k43}\right]^{k52} \cdot k51 \cdot \frac{\dot{m}^2}{\rho}\right)^c \tag{21}$$

bzw. mit bei gleichen Exponenten b und c auch durch eine Berechnungsformel:

$$V = \left(\frac{c_p}{\lambda} \cdot \mu\right)^a \cdot \left(\frac{2 \cdot k_{Ec}}{\rho \cdot c_p} \cdot \left[k41 + k42 \cdot \left(\frac{\dot{m}}{A \cdot \mu}\right)^{k43}\right]^{k52} \cdot k51 \cdot \frac{\dot{m}^2}{\rho}\right)^b \tag{22}$$

definiert werden. Im Ergebnis kann sowohl der Druckverlustkoeffizient ζ als auch die Druckdifferenz Δp somit auch anhand von solchen Meßgrößen ermittelt werden, die z.B. auch mittels eines vibronischen Meßsystem, beispielswiese nämlich auch einem (konventionellen) Coriolis-Massedurchfluß-Meßgerät, gemessen werden können.

Dementsprechend ist nach einer weiteren Ausgestaltung der Erfindung ferner vorgesehen, wenigstens einen den Massenstrom $\dot{m}$ des in der Leitung strömenden Meßstoffs repräsentierenden Massenstromwert $X_{\dot{m}}$ und/oder wenigstens einen die Reynolds-Zahl Re des in der Leitung strömenden Meßstoffs repräsentierenden Reynoldszahlwert $X_{Re}$ zu ermitteln. Der Reynoldszahlwert $X_{Re}$ kann gemäß der Berechnungsformel (1) beispielsweise so ermittelt werden, daß er eine Berechnungsvorschrift:

$$X_{Re} = k61 \cdot \frac{X_\rho \cdot X_U}{X_\mu} \tag{23}$$

oder eine Berechnungsformel:

$$X_{Re} = k62 \cdot \frac{X_{\dot{m}}}{X_\mu} \tag{24}$$

erfüllt, wobei der Koeffizient k61 mit der vorbezeichneten charakteristischen Länge Lbzw. der Koeffizient k62 mit der vorbezeichneten charakteristischen Länge A korrespondiert. Unter Verwendung des wenigstens einen Reynoldszahlwerts $X_{Re}$ sowie des vorbezeichneten Massenstromwerts $X_{\dot{m}}$ zusammen mit dem Dichtewert $X_\rho$ kann hernach sowohl der Druckverlustkoeffizientwert $X_\zeta$ als auch der Druckdifferenzwert $X_{\Delta p}$ berechnet werden, beispielsweise, derart, daß der Druckverlustkoeffizientwert $X_\zeta$ eine Berechnungsvorschrift:

$$X_\zeta = k41 + k42 \cdot X_{Re}^{k43} \tag{25}$$

erfüllt und/oder daß der Druckdifferenzwert $X_{\Delta p}$ eine Berechnungsvorschrift :

$$X_{\Delta p} = k51 \cdot \frac{X_{\dot{m}}^2}{X_\rho} \cdot \left( k41 + k42 \cdot X_{Re}^{k43} \right)^{k52} \tag{26}$$

erfüllt. Falls erforderlich, kann zudem auch der Geschwindigkeitswerts $X_U$ basierend auf der Berechnungsvorschrift unter Verwendung des wenigstens einen Massenstromwerts $X_{\dot{m}}$ und des wenigstens einen Dichtewerts $X_\rho$:

$$X_U = k7 \cdot \frac{X_{\dot{m}}}{X_\rho} \tag{27}$$

ermittelt werden.

Bei den vorbezeichneten Koeffizienten k41, k42, k43, k51, k52, k61, k62 und k7 handelt es sich jeweils ebenfalls um leitungs- bzw. meßsystemspezifische (Kalibrier-)Konstanten, die gleichermaßen wie die vorbezeichneten Koeffizienten k1, k2 für ein jeweiliges Meßsystem vorab, etwa durch Einmessen des Meßsystems unter Referenzbedingungen, ermittelt werden können, beispielsweise nämlich im Zuge einer Kalibrierung des Meßsystems beim Hersteller und/oder einer (Re-)Kalibrierung des Meßsystems vor Ort.

Nach einer weiteren Ausgestaltung der Erfindung ist ferner vorgesehen, das die Leitung zum Ermitteln des Dichtewerts $X_\rho$ und/oder zum Ermitteln des Viskositätswerts $X_\mu$ und/oder zum Ermitteln des Druckdifferenzwerts $X_{\Delta p}$ und/oder des vorbezeichneten Massenstromwerts $X_{\dot{m}}$ und/oder des vorbezeichneten Reynoldszahlwerts $X_{Re}$ vibrieren gelassen wird; dies beispielsweise derart, daß die Leitung 111 zu Nutzschwingungen, nämlich mechanischen Schwingungen um einen zugehörige statische Ruhelage mit wenigstens einer einer der Leitung immannenten, beispielsweise nämlich auch von der Dichte ρ des des in der Leitung 111 strömenden Meßstoffs FL abhängige Resonanzfrequenz entsprechenden bzw. davon nur geringfügig abweichenden Schwingfrequenz aktiv angeregt wird. Das aktive Anregen von mechanischen Schwingungen der Leitung 111, mithin das Anregen der Nutzschwingungen kann, wie auch in Fig. 3 dargestellt, beispielsweise mittels wenigstens eines auf die Leitung 111 wirkenden elektromechanischen Schwingungserregers 31 erfolgen, der dafür eingerichtet ist, elektrische Leistung in eine Schwingungen der Leitung 111 bewirkende mechanische Antriebskraft zu wandeln und nämliche Antriebskraft in die Leitung 111 einzuleiten und/oder der für den vorbezeichneten Fall, daß das Meßsystem mittels eines Coriolis-Massedurchfluß-Meßgeräts gebildet ist, gleichermaßen wie die Leitung 111 Bestandteil nämlichen Coriolis-Massedurchfluß-Meßgeräts sein kann. Alternativ oder in Ergänzung kann der wenigstens eine Schwingungserreger 31 ferner an die vorbezeichnete (Meßsystem-)Elektronik 20 elektrisch angeschlossen sein, beispielsweise mittels elektrischer Verbindunsgleitung, und kann die (Meßsystem-)Elektronik eingerichtet sein, mittels eines elektrischen Anregungssignals e1 zum Bewirken von mechanischen Schwingungen der Leitung erforderliche elektrische Leistung in den Schwingunsgererger 31 einzuspeisen. Darüberhinaus ist ferner vorgesehen, die vorbezeichneten mechanischen Schwingungen der Leitung zu erfassen und, wie in Fig. 3 angedeutet, in Schwingungssignale s1, s2, beispielsweise nämlich Schwingungsbewegungen der Leitung repräsentierendes elektrische Schwingungsmeßsignal mit jeweils einer von einer Geschwindigkeit der Schwingungsbewegungen der Leitung abhängigen elektrische Signalspannung, zu wandeln; dies im besonderen in der Weise, daß zwischen den Schwingungssignalen s1, s2 eine vom Massestrom $\dot{m}$ des in der Leitung 111 strömenden Meßstoffs FL abhängige Phasendifferenz etabliert ist und/oder daß jedes der Schwingungssignale s1, s2 eine von der Dichte $\rho$ des des in der Leitung 111 strömenden Meßstoffs FL abhängige Signalfrequenz aufweist. Das Erfassen von mechanischen Schwingungen der Leitung, inbs. nämlich den vorbezeichneten Nutzschwingungen, und zum Wandeln nämlicher Schwingungen in entsprechende Schwingunsgsignale erfolgt nach einer weiteren Ausgestaltung der Erfindung mittels zweier in Strömungsrichtung voneinander beabstandet jeweils an der Leitung bzw. in deren Nähe angeordneten, beispielsweise elektrodynamischen oder optischen, Schwingungssensoren 41, 42, die für den vorbezeichneten Fall, daß das Meßsystem mittels eines Coriolis-Massedurchfluß-Meßgeräts gebildet ist, beispielsweise auch jeweils gleichermaßen wie die Leitung Bestandteil nämlichen Coriolis-Massedurchfluß-Meßgeräts sein können. Alternativ oder in Ergänzung können die Schwingungssensoren ferner an die vorbezeichnete (Meßsystem-)Elektronik 20 elektrisch angeschlossen sein, beispielsweise mittels elektrischer Verbindunsgleitung, und kann die (Meßsystem-)Elektronik 20 eingerichtet sein, die Schwingungssignale der Schwingungssensoren 41, 42 zu empfangen und auszuwerten, beispielsweise nämlich zu digitalisieren und/oder anhand der Schwingungssignale s1, s2 bzw. anhand der Schwingungssignale s1, s2 sowie des vorbezeichneten elektrischen Anregungssignals den Dichtewert $X_\rho$ und/oder den Viskositätswert $X_\mu$ und/oder den Druckdifferenzwert $X_{\Delta p}$ und/oder den vorbezeichneten Massenstromwert $X_{\dot{m}}$ und/oder den vorbezeichneten Reynoldszahlwert $X_{Re}$ zu ermitteln.

Wie bereits erwähnt besteht ein besonderes Ziel der Erfindung u.a. auch darin bzw. ist das erfindungsgemäße Meßsystem geeignet, daß damit bezüglich der Ermittlung der Meßstoff-Temperatur $T_M$ eine im Vergleich zu herkömmlichen Meßsystemen bzw. Meßverfahren höher Meßgenauigkeit erzielt werden kann; dies im besonderen auch in der Weise, daß ein erfindungsgemäß ermittelter Meßstoff-Temperaturwert $X_{TM}$ von der tatsächlichen bzw. wahren Meßstoff-Temperatur $T_M$ um weniger als 3 K, insb. weniger als 1 K, abweicht, nicht zuletzt auch für den Fall, daß nämlich Meßstoff-Temperaturwert $X_{TM}$ der Kerntemperatur repräsentiert. Das erfindungsgemäße Verfahren hat zudem u.a. auch den Vorteil, daß die angestrebte hohe Meßgenauigkeit bei der Ermittlung der Meßstoff-Temperatur $T_M$ auch errreicht werden kann, falls der Dichtewert $X_\rho$ von der (wahren bzw. tatsächlichen) Dichte $\rho$ des Meßstoffs um nicht mehr als 0,5% der Dichte $\rho$ ($f_\rho$<0,5% ) abweicht und/oder falls der Druckdifferenzwert $X_{\Delta p}$ von der (wahren bzw. tatsächlichen) Druckdifferenz $\Delta p$ um nicht mehr als 15% der Druckdifferenz $\Delta p$ ($f_{\Delta p} < 15\%$) abweicht, und/oder falls der Viskositätswert $X_\mu$ von der (wahren bzw. tatsächlichen) Viskosität $\mu$ des Meßstoffs um nicht mehr als 15% der Viskosität $\mu$ ($f_\mu < 15\%$) abweicht und/oder falls der Temperaturleitfähigkeitswert $X_\lambda$ von der (wahren bzw. tatsächlichen) Temperaturleitfähigkeit $\lambda$ des Meßstoffs um nicht mehr als 50% der Temperaturleitfähigkeit $\lambda$ ($f_\lambda < 50\%$) abweicht und/oder falls der Wärmekapazitätwert $X_{cp}$ von der (wahren bzw. tatsächlichen) spezifische Wärmekapazität $c_p$ des Meßstoffs um nicht mehr als 50% der spezifische Wärmekapazität $c_p$ ($f_{cp} < 50\%$) abweicht; dies im besonderen auch für den Fall, daß der Dichtewert $X_\rho$ von der (wahren bzw. tatsächlichen) Dichte $\rho$

des Meßstoffs um mehr als 0,1% der Dichte $\rho$ ($f_\rho$>0,1% ) und/oder der Viskositätswert $X_\mu$ von der (wahren bzw. tatsächlichen) Viskosität $\mu$ des Meßstoffs um mehr als 2% der Viskosität $\mu$ ($f_\mu > 2\%$) und/oder der Druckdifferenzwert $X_{\Delta p}$ von der (wahren bzw. tatsächlichen) Druckdifferenz $\Delta p$ um mehr als 5% der Druckdifferenz $\Delta p$ ($f_{\Delta p} > 5\%$) und/oder der Temperaturleitfähigkeitswert $X_\lambda$ von der (wahren bzw. tatsächlichen) Temperaturleitfähigkeit $\lambda$ des Meßstoffs um mehr als 5% der Temperaturleitfähigkeit $\lambda$ ($f_\lambda > 5\%$) und/oder der Wärmekapazitätwert $X_{cp}$ von der (wahren bzw. tatsächlichen) spezifische Wärmekapazität $c_p$ des Meßstoffs um mehr als 5% der spezifische Wärmekapazität $c_p$ ($f_{cp} > 5\%$) abweicht. Von Vorteil für die erfindungsgemäße Ermittlung der Meßstoff-Temperatur $T_M$ kann es hierbei ferner sein, nicht zuletzt auch für den Fall, daß es sich dabei um die vorbezeichnete Kerntemperatur handelt, daß die die spezifische Wärmekapazität $c_p$ nicht mehr als 5 kJ·kg$^{-1}$·K$^{-1}$ beträgt und/oder daß die Temperaturleitfähigkeit $\lambda$ des Meßstoffs nicht mehr als 1 W·m$^{-1}$·K$^{-1}$ beträgt und/oder daß die Dichte $\rho$ des Meßstoffs kleiner 2000 kg·m$^{-3}$ ist.

## Patentansprüche

**1.**  Verfahren zum Ermitteln einer Meßstoff-Temperatur $T_M$, nämlich einer Temperatur, insb. einer Kerntemperatur, eines in einer Leitung (111), insb. einem Rohr, geführten Meßstoffs (FL), wobei die Leitung ein von einer, insb. metallischen, Wandung umschlossenes Lumen aufweist, welches Verfahren umfaßt:

- Strömenlassen des Meßstoffs durch die Leitung in einer vorgegebenen Strömungsrichtung, insb. mit einer Strömungsgeschwindigkeit U von mehr als 0,1 m/s;
- Ermitteln wenigstens eines eine Wand-Temperatur $T_w$, nämlich eine Temperatur der Wandung, insb. an einer dem Lumen abgewandten Oberfläche der Wandung, an einer dem Lumen zugewandten Oberfläche der Wandung oder von innerhalb der Wandung, repräsentierenden Wand-Temperaturwerts $X_{Tw}$;
- Ermitteln wenigstens eines eine Dichte $\rho$ des in der Leitung strömenden Meßstoffs repräsentierenden Dichtewerts $X_\rho$;
- Ermitteln wenigstens eines eine Viskosität $\mu$, insb. eine effektive dynamische Viskosität, des in der Leitung strömenden Meßstoffs repräsentierenden Viskositätswerts $X_\mu$;

**dadurch gekennzeichnet, daß** das Verfahren weiterhin die Schritte umfaßt:

- Ermitteln wenigstens eines eine Temperaturleitfähigkeit $\lambda$ des Meßstoffs repräsentierenden Temperaturleitfähigkeitswerts $X_\lambda$;
- Ermitteln wenigstens eines eine spezifische Wärmekapazität $c_p$ des Meßstoffs repräsentierenden Wärmekapazitätwerts $X_{cp}$;
- Ermitteln wenigstens eines eine innerhalb des in der Leitung strömenden Meßstoffs in Strömungsrichtung etablierte Druckdifferenz $\Delta p$, insb. nämlich eine Differenz zwischen einem im strömenden Meßstoff etablierten ersten statischen Druck p1 und einem stromabwärts des ersten statischen Drucks p1 im strömenden Meßstoff etablierten zweiten statischen Druck p2, repräsentierenden Druckdifferenzwerts $X_{\Delta p}$;
- Verwenden des wenigstens einen Dichtewerts, des wenigstens einen Viskositätswerts $X_\mu$, des wenigstens einen Druckdifferenzwerts $X_{\Delta p}$, des wenigstens einen Temperaturleitfähigkeitswerts $X_\lambda$ und des wenigstens einen Wärmekapazitätwerts $X_{cp}$ zum Ermitteln wenigstens eines Kennzahlenwerts $X_V$ für eine Meßstoff-Kennzahl V, die eine durch Dissipation herbeigeführte Erwärmung des in der Leitung strömenden Meßstoffs, insb. in einem nahe der Wandung verorteten Teilvolumen des strömenden Meßstoffs, charakterisiert, wobei die Meßstoff-Kennzahl V einer sowohl durch eine Eckert-Zahl Ec des in der Leitung strömenden Meßstoffs, eine Prandtl-Zahl Pr des in der Leitung strömenden Meßstoffs sowie einen Druckverlustkoeffizienten $\zeta$ der Leitung als auch durch einen leitungsspezifischen ersten Exponenten a, einen leitungsspezifischen zweiten Exponenten b sowie einen leitungsspezifischen dritten Exponenten c bestimmten Berechnungsformel:

$$V = f\big(\Delta p, \rho, \mu, \lambda, c_p\big) = Pr^a \cdot Ec^b \cdot \zeta^c$$

entspricht;
- und Verwenden des wenigstens einen Kennzahlenwerts $X_V$ sowie des wenigstens einen Wand-Temperaturwerts $X_{Tw}$ zum Ermitteln wenigstens eines die Meßstoff-Temperatur $T_M$, insb. die Kerntemperatur des Meßstoffs, repräsentierenden Meßstoff-Temperaturwerts $X_{TM}$, insb. derart, daß der Meßstoff-Temperaturwert $X_{TM}$ eine Berechnungsformel:

$$X_{TM} = X_{TW} - (k1 \cdot X_V + k2) = X_{TW} - X_{\Delta T}$$

erfüllt .

2. Verfahren nach einem der vorherigen Ansprüche, wobei der Meßstoff-Temperaturwert $X_{TM}$ eine sowohl vom Kennzahlenwert $X_V$ als auch dem Wand-Temperaturwert $X_{Tw}$ abhängige sowie durch einen leitungsspezifischen ersten Koeffizienten k1 und einen leitungsspezifischen zweiten Koeffizienten k2 parametrisierte Berechnungsformel:

$$X_{TM} = X_{TW} - (k1 \cdot X_V + k2) = X_{TW} - X_{\Delta T}$$

erfüllt.

3. Verfahren nach dem vorherigen Anspruch,

- wobei der erste Koeffizient k1 und der zweite Koeffizient k2 vorab ermittelte (Kalibrier-)Konstanten sind; und/oder
- wobei der erste Koeffizient k1 nicht weniger als 0,5 K (Kelvin) und nicht mehr als 1,5 K beträgt; und/oder
- wobei der zweite Koeffiziente k2 nicht weniger als -0,2 K und nicht mehr als 0,2 K beträgt, insb. gleich 0 ist.

4. Verfahren nach einem der vorherigen Ansprüche,

- wobei der erste Exponent a mehr als 0,1 und weniger als 0,5, insb. 0,3, beträgt; und/oder
- wobei der zweite Exponent b mehr als 0,8 und weniger als 1,2, insb. 1, beträgt; und/oder
- wobei der dritte Exponent c mehr als 0,8 und weniger als 1,2, insb. 1, beträgt; und/oder
- wobei der zweite Exponent b gleich dem dritten Exponent c ist, insb. nämlich gleich Eins ist.

5. Verfahren nach einem der vorherigen Ansprüche, wobei der Kennzahlenwert $X_V$ eine Berechnungsformel:

$$X_V = \left( \frac{X_{cp}}{X_\lambda} \cdot X_\mu \right)^a \cdot \left( k3 \cdot \frac{2 \cdot X_{\Delta p}}{X_\rho \cdot X_{cp}} \right)^b$$

erfüllt, mit k3 = 1 K$^{-1}$.

6. Verfahren nach dem vorherigen Anspruch, wobei der zweite Exponent b gleich Eins ist.

7. Verfahren nach einem der vorherigen Ansprüche,

- wobei die spezifische Wärmekapazität $c_p$ des Meßstoffs nicht weniger als 1 kJ·kg$^{-1}$·K$^{-1}$ und nicht mehr als 5 kJ·kg$^{-1}$·K$^{-1}$ beträgt; und/oder
- wobei die Temperaturleitfähigkeit $\lambda$ des Meßstoffs nicht weniger als 0,1 W·m$^{-1}$·K$^{-1}$ und nicht mehr als 1 W·m$^{-1}$·K$^{-1}$ beträgt; und/oder
- wobei die Viskosität $\mu$, des Meßstoffs größer als 1 mPa·s, insb. größer als 10 mPa·s, ist; und/oder
- wobei die Dichte $\rho$ des Meßstoffs größer als 500 kg·m$^{-3}$ und/oder kleiner 2000 kg·m$^{-3}$ ist; und/oder
- wobei der in der Leitung strömende Meßstoff eine, insb. mittlere oder größte, Strömungsgeschwindigkeit U aufweist, die größer als 0,1 m·s$^{-1}$, insb. größer als 1 m·s$^{-1}$, ist; und/oder
- wobei der in der Leitung strömende Meßstoff einen Massenstrom $\dot{m}$ aufweist, der größer als 0,01 kg·s$^{-1}$, insb. größer als 0,1 kg·s$^{-1}$, ist; und/oder
- wobei der in der Leitung strömenden Meßstoff eine Reynolds-Zahl Re aufweist, die größer als 100, insb. größer als 1000, ist; und/oder
- wobei der Dichtewert $X_\rho$ von der (wahren) Dichte $\rho$ des Meßstoffs um nicht mehr als 0,5% der Dichte $\rho$ ($f_\rho$<0,5% ), insb. um mehr als 0,1% der Dichte $\rho$ ($f_\rho$>0,1% ), abweicht; und/oder
- wobei der Druckdifferenzwert $X_{\Delta p}$ von der (wahren) Druckdifferenz $\Delta p$ um nicht mehr als 15% der Druckdifferenz $\Delta p$ ($f_{\Delta p}$ < 15%), insb. um mehr als 5% der Druckdifferenz $\Delta p$ ($f_{\Delta p}$ > 5%), abweicht; und/oder
- wobei der Viskositätswert $X_\mu$ von der (wahren) Viskosität $\mu$ des Meßstoffs um nicht mehr als 15% der Viskosität $\mu$ ($f_\mu$ < 15%), insb. um mehr als 2% der Viskosität $\mu$ ($f_\mu$ > 2%), abweicht; und/oder
- wobei der Temperaturleitfähigkeitswert $X_\lambda$ von der (wahren) Temperaturleitfähigkeit $\lambda$ des Meßstoffs um nicht mehr als 50% der Temperaturleitfähigkeit $\lambda$ ($f_\lambda$ < 50%), insb. mehr als 5% der Temperaturleitfähigkeit $\lambda$ ($f_\lambda$ > 5%), abweicht; und/oder
- wobei der Wärmekapazitätwert $X_{cp}$ von der (wahren) spezifische Wärmekapazität $c_p$ des Meßstoffs um nicht mehr als 50% der spezifische Wärmekapazität $c_p$ ($f_{cp}$ < 50%), insb. um mehr als 5% der spezifische Wärmekapazität $c_p$ ($f_{cp}$ > 5%), abweicht; und/oder
- wobei die Wandtemperatur $T_w$ ($T_M < T_w$), insb. um mehr als 1 K, höher ist als die Temperatur $T_M$ des Meßstoffs, insb. nämlich eine Kerntemperatur des Meßstoffs; und/oder
- wobei der Meßstoff-Temperaturwert $X_{TM}$ kleiner ist als der Wand-Temperaturwert $X_{Tw}$ ($X_{TM} < X_{Tw}$); und/oder
- wobei der Meßstoff-Temperaturwert $X_{TM}$ eine Kerntemperatur des Meßstoffs repräsentiert; und/oder
- wobei der Wand-Temperaturwert $X_{Tw}$ die Temperatur $T_w$, insb. die Oberflächentemperatur, eines hohlzylindrischen Segments der Wandung repräsentiert; und/oder
- wobei zum Ermitteln des wenigstens Wand-Temperaturwerts $X_{Tw}$ eine Oberflächentemperatur der Wandung, insb. nämlich an einem hohlzylindrischen Segment der Wandung, erfaßt wird; und/oder
- wobei die Wandung der Leitung aus Metall, insb. einem Stahl, einer Titan-Legierung, einer Tantal-Legierung oder einer Zirkonium-Legierung, besteht; und/oder
- wobei die Wandung der Leitung eine Wandstärke aufweist, die nicht weniger als 0,5 mm, insb. mehr als 1 mm, und/oder nicht mehr als 5 mm, insb. weniger als 3 mm, beträgt; und/oder
- wobei die Leitung zum Ermitteln des Dichtewerts und/oder zum Ermitteln des Viskositätswerts und/oder zum Ermitteln des Druckdifferenzwerts $X_{\Delta p}$ vibrieren gelassen, insb. nämlich mittels eines elektromechanischen Schwingungserregers eines Coriolis-Massedurchfluß-/Dichte-Meßgeräts aktiv zu mechanischen Schwingungen angeregt, wird.

8. Verfahren nach einem der vorherigen Ansprüche, weiters umfassend:

- Ermitteln wenigstens eines einen Massenstrom $\dot{m}$ des in der Leitung strömenden Meßstoffs repräsentierenden Massenstromwerts $X_{\dot{m}}$; sowie
- Ermitteln wenigstens eines eine Reynolds-Zahl Re des in der Leitung strömenden Meßstoffs repräsentierenden Reynoldszahlwerts $X_{Re}$.

9. Verfahren nach dem vorherigen Anspruch,

- wobei der Druckdifferenzwert $X_{\Delta p}$ eine Berechnungsvorschrift:

$$X_{\Delta p} = k51 \cdot \frac{X_{\dot{m}}^2}{X_\rho} \cdot \left( k41 + k42 \cdot X_{Re}^{k43} \right)^{k52}$$

erfüllt, wobei k41, k42, k51 und k52 leitungs- bzw. meßsystemspezifische (Kalibrier-)Konstanten sind, die für ein jeweiliges Meßsystem vorab, insb. durch Einmessen des Meßsystems unter Referenzbedingungen, ermittelt sind, insb. nämlich im Zuge einer Kalibrierung des Meßsystems beim Hersteller und/oder einer (Re-)Kalibrierung des Meßsystems vor Ort; und/oder
- wobei der Reynoldszahlwert $X_{Re}$ eine Berechnungsvorschrift:

$$X_{Re} = k62 \cdot \frac{X_{\dot{m}}}{X_\mu}$$

erfüllt, wobei der Koeffizient k62 eine leitungs- bzw. meßsystemspezifische (Kalibrier-)Konstante ist, die für ein jeweiliges Meßsystem vorab, insb. durch Einmessen des Meßsystems unter Referenzbedingungen, ermittelt ist, insb. nämlich im Zuge einer Kalibrierung des Meßsystems beim Hersteller und/oder einer (Re-)Kalibrierung des Meßsystems vor Ort, und die mit einer charakteristischen Länge A korrespondiert; und/oder
- wobei ein Druckverlustkoeffizientwert $X_\zeta$ eine Berechnungsvorschrift:

$$X_\zeta = k41 + k42 \cdot X_{Re}^{k43}$$

erfüllt, wobei k41 und k42 leitungs- bzw. meßsystemspezifische (Kalibrier-)Konstanten sind, die für ein jeweiliges Meßsystem vorab, insb. durch Einmessen des Meßsystems unter Referenzbedingungen, ermittelt sind, insb. nämlich im Zuge einer Kalibrierung des Meßsystems beim Hersteller und/oder einer (Re-)Kalibrierung des Meßsystems vor Ort.

10. Verfahren nach einem der vorherigen Ansprüche, weiters umfassend: Ermitteln wenigstens eines eine, insb. mittlere oder größte, Strömungsgeschwindigkeit U des in der Leitung strömenden Meßstoffs repräsentierenden Geschwindigkeitswerts $X_U$.

11. Verfahren nach dem vorherigen Anspruch,

- wobei ein Druckverlustkoeffizientwer $X_\zeta$ eine Berechnungsvorschrift:

$$X_\zeta = \frac{X_{\Delta p}}{0{,}5 \cdot X_\rho \cdot X_U^2}$$

erfüllt; und/oder
- wobei der Kennzahlenwert $X_V$ einer Berechnungsvorschrift:

$$X_V = \left( \frac{X_{cp} \cdot X_\mu}{X_\lambda} \right)^a \cdot \left( k_3 \cdot \frac{X_U^2}{X_{cp}} \right)^b \cdot \left( 2 \cdot \frac{X_{\Delta p}}{X_\rho \cdot X_U^2} \right)^c$$

erfüllt, mit k3 = 1 K$^{-1}$.

12. Verfahren nach einem der vorherigen Ansprüche, weiters umfassend:

- Ermitteln eines Fließindex n des in der Leitung strömenden Meßstoffs; und/oder
- Verwenden des Temperatur-Meßsignals zum Ermitteln des wenigstens einen Wand-Temperaturwerts $X_{Tw}$.

13. Verfahren nach einem der vorherigen Ansprüche, weiters umfassend: Verwenden eines Coriolis-Massedurchfluß-/Dichte-Meßgeräts zum Ermitteln des Dichtewerts $X_\rho$ und/oder zum Ermitteln des Viskositätswerts $X_\mu$ und/oder zum Ermitteln des Druckdifferenzwerts $X_{\Delta p}$.

14. Verfahren nach dem vorherigen Anspruch, wobei die Leitung Bestandteil des Coriolis-Massedurchfluß-/Dichte-Meßgeräts ist.

15. Verfahren nach einem der vorherigen Ansprüche, weiters umfassend: Verwenden eines Differenzdruck-Meßgeräts zum Ermitteln des Druckdifferenzwerts $X_{\Delta p}$.

16. Verfahren nach dem vorherigen Anspruch, wobei die Leitung Bestandteil des Differenzdruck-Meßgeräts ist.

17. Verfahren nach einem der vorherigen Ansprüche, weiters umfassend:

   - Erfassen eines im strömenden Meßstoff etablierten ersten statischen Drucks sowie eines in Strömungsrichtung stromabwärts davon im strömenden Meßstoff etablierten zweiten statischen Drucks;
   - sowie Ermitteln des Druckdifferenzwerts $X_{\Delta p}$ anhand der erfaßten ersten und zweiten statischen Drücke.

18. Verfahren nach einem der vorherigen Ansprüche, weiters umfassend:

   - Erfassen der Temperatur $T_W$ der Wandung, insb. einer Oberflächentemperatur eines hohlzylindrischen Segments der Wandung,
   - und Erzeugen eines einer Änderung nämlicher Temperatur $T_W$ mit einer Änderung wenigstens eines Signalparameters folgenden, insb. elektrischen, Temperatur-Meßsignals.

19. Verfahren nach dem vorherigen Anspruch, weiters umfassend: Verwenden eines mit einer Mantelfläche der Wandung thermisch gekoppelten Temperatursensors (21) zum Erzeugen des Temperatur-Meßsignals.

20. Meßsystem, insb. vibronisches Meßsystem, eingerichtet zur Verwirklichung des Verfahrens nach dem vorherigen Anspruch, welches Meßsystem umfaßt:

   - die Leitung (111),
   - den Temperatursensor (21)
   - sowie eine elektrisch an den Temperatursensor angeschlossene, insb. mittels wenigstens eines Mikroprozessors gebildete, Meß- und Betriebs-Elektronik, wobei die Meß- und Betriebs-Elektronik eingerichtet ist, den wenigstens einen Meßstoff-Temperaturwert $X_{TM}$ zu ermitteln.

21. Meßsystem nach dem vorherigen Anspruch,

   - wobei die Meß- und Betriebs-Elektronik eingerichtet ist, den wenigstens einen Wand-Temperaturwert $X_{Tw}$ zu ermitteln; und/oder
   - wobei die Meß- und Betriebs-Elektronik eingerichtet ist, den wenigstens einen Kennzahlenwert $X_V$ für die Meßstoff-Kennzahl V zu ermitteln.

22. Meßsystem nach einem der Ansprüche 20 bis 22, weiters umfassend:

   - einen Schwingungserreger (31) zum Anregen von mechanischen Schwingungen der Leitung (111)
   - sowie erste und zweite Schwingungssensoren (41, 42) zum Erfassen mechanischer Schwingungen der Leitung (111) und zum Wandeln nämlicher Schwingungen in erste bzw. zweite Schwingunsgsignale (s1; s2).

23. Meßsystem nach dem vorherigen Anspruch,

   - wobei sowohl der Schwingungserreger (31) als auch die ersten und zweiten Schwingungssensoren (41, 42) an die Meßsystem-Elektronik elektrisch angeschlossen sind,
   - und wobei die Meßsystem-Elektronik eingerichtet ist,

      -- mittels eines elektrischen Anregungssignals (e1) dem Bewirken mechanischer Schwingungen der Leitung dienliche elektrische Leistung in den Schwingunsgererger (31) einzuspeisen,
      -- sowie die Schwingungssignale (s1, s2) der Schwingungssensoren (41, 42) zu empfangen und auszuwerten, insb. nämlich zu digitalisieren und/oder anhand der Schwingungssignale (s1, s2) bzw. anhand der Schwingungssignale (s1, s2) sowie des elektrischen Anregungssignals (e1) den Dichtewert $X_\rho$ und/oder den Viskositätswert $X_\mu$ und/oder den Druckdifferenzwert $X_{\Delta p}$ und/oder den Massenstromwert $X_{\dot{m}}$ und/oder den Reynoldszahlwert $X_{Re}$ zu ermitteln.

24. Meßsystem nach einem der Ansprüche 20 bis 24, weiters umfassend: in Strömungsrichtung voneinander beabstandet in die Wandung der Leitung eingelassene erste und zweite Drucksensoren zum Erfassen der Druckdifferenz.

25. Meßsystem nach dem vorherigen Anspruch, wobei sowohl der erste Drucksensor als auch der zweite elektrisch an die Meßsystem-Elektronik (200) angeschlossen ist und wobei die Meßsystem-Elektronik (200) eingerichtet ist, den Druckdifferenzwert $X_{\Delta p}$, insb. nämlich auch auch den Viskositätswert $X_\mu$ und/oder den Geschwindigkeitswert $X_U$, unter Verwendung von mittels der vorbezeichneten Drucksensoren generierten, insb. digitalen, Druckmeßsignalen zu ermitteln.

## Claims

1. A method for determining a measured substance temperature $T_M$, that is to say a temperature, in particular a core temperature, of a measured substance (FL) conducted in a line (111), in particular a tube, wherein the line has a lumen enclosed by a wall, in particular a metal wall, said method comprising:

   - Allowing the measured substance to flow through the line in a predetermined flow direction, in particular with a flow velocity U of more than 0.1 m/s;
   - Determining at least one wall temperature value $X_{TW}$ representing a wall temperature $T_W$, that is to say a temperature of the wall, in particular on a surface of the wall facing away from the lumen, on a surface of the wall facing toward the lumen, or from inside the wall;
   - Determining at least one density value $X_\rho$ representing a density $\rho$ of the measured substance flowing in the line;
   - Determining at least one viscosity value $X_\mu$ representing a viscosity $\mu$, in particular an effective dynamic viscosity, of the measured substance flowing in the line;

   **characterized in that** the method further comprises the steps:

   - Determining at least one thermal conductivity value $X_\lambda$ representing a thermal conductivity $\lambda$ of the measured substance;
   - Determining at least one thermal capacity value $X_{cp}$ representing a specific thermal capacity $C_p$ of the measured substance;
   - Determining at least one pressure difference value $X_{\Delta p}$ representing a pressure difference $\Delta p$ established in the measured substance flowing in the line in the flow direction, that is to say, in particular a difference between a first static pressure p1 established in the flowing measured substance and a second static pressure p2 established in the flowing measured substance downstream of the first static pressure p1
   - Using the at least one density value, the at least one viscosity value $X_\mu$, the at least one pressure difference value $X_{\Delta p}$, the at least one thermal conductivity value $X_\lambda$, and the at least one thermal capacity value $X_{cp}$ to determine at least one characterizing number value $X_V$ for a measured substance characterizing number V, which characterizes heating of the measured substance flowing in the line caused by dissipation, in particular in a partial volume of the flowing measured substance located near the wall, wherein the measured substance characterizing number V corresponds to a calculation formula determined both by an Eckert number Ec of the measured substance flowing in the line, a Prandtl number Pr of the measured substance flowing in the line, and a pressure loss coefficient $\zeta$ of the line, as well as by a line-specific first exponent a, a line-specific second exponent b, and a line-specific third exponent c:

$$V = f\left(\Delta p, \rho, \mu, \lambda, c_p\right) = Pr^a \cdot Ec^b \cdot \zeta^c$$

   - and using the at least one characterizing number value $X_V$ and the at least one wall temperature value $X_{TW}$ to determine at least one measured substance temperature value $X_{TM}$ representing the measured substance temperature $T_M$, in particular the core temperature of the measured substance, in particular in such a way that the measured substance temperature value $X_{TM}$ satisfies a calculation formula:

$$X_{TM} = X_{TW} - (k1 \cdot X_V + k2) = X_{TW} - X_{\Delta T}$$

2. The method as claimed in one of the preceding claims, wherein the measured substance temperature value $X_{TM}$ satisfies a calculation formula which is dependent on both the characterizing number value $X_V$ and the wall temperature value $X_{TW}$ and is parameterized by a line-specific first coefficient k1 and a line-specific second coefficient k2:

$$X_{TM} = X_{TW} - (k1 \cdot X_V + k2) = X_{TW} - X_{\Delta T}$$

3. The method as claimed in the preceding claim,

   - wherein the first coefficient k1 and the second coefficient k2 are (calibration) constants determined in advance; and/or
   - wherein the first coefficient k1 is not less than 0.5 K (Kelvin) and not more than 1.5 K; and/or
   - wherein the second coefficient k2 is not less than -0.2 K and not more than 0.2 K, in particular is equal to 0.

4. The method as claimed in one of the preceding claims,

   - wherein the first exponent a is more than 0.1 and less than 0.5, in particular 0.3; and/or
   - wherein the second exponent b is more than 0.8 and less than 1.2, in particular 1; and/or
   - wherein the third exponent c is more than 0.8 and less than 1.2, in particular 1; and/or
   - wherein the second exponent b is equal to the third exponent c, that is to say, in particular is equal to one.

5. The method as claimed in one of the preceding claims, wherein the characterizing number value $X_V$ satisfies a calculation formula:

$$X_V = \left( \frac{X_{cp}}{X_\lambda} \cdot X_\mu \right)^a \cdot \left( k3 \cdot \frac{2 \cdot X_{\Delta p}}{X_\rho \cdot X_{cp}} \right)^b$$

where k3 = 1 K$^{-1}$.

6. The method as claimed in the preceding claim, wherein the second exponent b is equal to one.

7. The method as claimed in one of the preceding claims,

   - wherein the specific thermal capacity $C_p$ of the measured substance is not less than 1 kJ kg$^{-1}$ K$^{-1}$ and not more than 5 kJ kg$^{-1}$ K$^{-1}$; and/or
   - wherein the thermal conductivity $\lambda$ of the measured substance is not less than 0.1 W m$^{-1}$ K$^{-1}$ and not more than 1 W m$^{-1}$ K$^{-1}$; and/or
   - wherein the viscosity $\mu$ of the measured substance is greater than 1 mPa s, in particular greater than 10 mPa s; and/or
   - wherein the density $\rho$ of the measured substance is greater than 500 kg m$^{-3}$ and/or less than 2000 kg m$^{-3}$; and/or
   - - wherein the measured substance flowing in the line has a flow velocity U, in particular an average or maximum flow velocity, which is greater than 0.1 m s$^{-1}$, in particular greater than 1 m s$^{-1}$; and/or
   - wherein the measured substance flowing in the line has a mass flow rh which is greater than 0.01 kg s$^{-1}$, in particular greater than 0.1 kg s$^{-1}$; and/or
   - wherein the measured substance flowing in the line has a Reynolds number Re which is greater than 100, in particular greater than 1000; and/or
   - wherein the density value $X_\rho$ deviates from the (true) density $\rho$ of the measured substance by no more than 0.5% of the density $\rho$ ($f_\rho$ < 0.5%), in particular by more than 0.1% of the density $\rho$ ($f_\rho$ > 0.1%); and/or
   - wherein the pressure difference value $X_{\Delta p}$ does not deviate from the (true) pressure difference $\Delta p$ by more than 15% of the pressure difference $\Delta p$ ($f_{\Delta p}$ < 15%), in particular by more than 5% of the pressure difference $\Delta p$ ($f_{\Delta p}$ > 5%); and/or
   - wherein the viscosity value $X_\mu$ does not deviate from the (true) viscosity $\mu$ of the measured substance by more than 15% of the viscosity $\mu$ ($f_\mu$ < 15%), in particular by more than 2% of the viscosity $\mu$ ($f_\mu$ > 2%); and/or

- wherein the thermal conductivity value $X_\lambda$ does not deviate from the (true) thermal conductivity $\lambda$ of the measured substance by more than 50% of the thermal conductivity $\lambda$ ($f_\lambda < 50\%$), in particular by more than 5% of the thermal conductivity $\lambda$ ($f_\lambda > 5\%$); and/or

- wherein the thermal capacity value $X_{cp}$ does not deviate from the (true) specific thermal capacity $C_p$ of the measured substance by more than 50% of the specific thermal capacity $C_p$ ($f_{cp} < 50\%$), in particular by more than 5% of the specific thermal capacity $C_p$ ($f_{cp} > 5\%$); and/or

- wherein the wall temperature $T_W$ ($T_M < T_W$), is higher, in particular by more than 1 K, than the temperature $T_M$ of the measured substance, that is to say, in particular a core temperature of the measured substance; and/or

- wherein the measured substance temperature value $X_{TM}$ is lower than the wall temperature value $X_{TW}$ ($X_{TM} < X_{TW}$); and/or

- wherein the measured substance temperature value $X_{TM}$ represents a core temperature of the measured substance; and/or

- wherein the wall temperature value $X_{TW}$ represents the temperature $T_W$, in particular the surface temperature, of a hollow cylindrical segment of the wall; and/or

- wherein, to determine the at least wall temperature value $X_{TW}$ a surface temperature of the wall, that is to say, in particular on a hollow cylindrical segment of the wall, is detected; and/or

- wherein the wall of the line is made of metal, in particular a steel, a titanium alloy, a tantalum alloy or a zirconium alloy; and/or

- wherein the wall of the line has a wall thickness which is not less than 0.5 mm, in particular more than 1 mm, and/or not more than 5 mm, in particular less than 3 mm; and/or

- wherein the line for determining the density value and/or for determining the viscosity value and/or

- for determining the pressure difference value $X_{\Delta p}$ is made to oscillate, that is to say, in particular is actively made to mechanically oscillate by means of an electromechanical oscillation exciter of a Coriolis mass flow/density meter.

8. The method as claimed in one of the preceding claims, further comprising:

- Determining at least one mass flow value $X_m$ representing a mass flow m of the measured substance flowing in the line; and

- Determining at least one Reynolds number value $X_{Re}$ representing a Reynolds number Re of measured substance flowing in the line.

9. The method as claimed in the preceding claim,

- wherein the pressure difference value $X_{\Delta p}$ satisfies a calculation rule:

$$X_{\Delta p} = k51 \cdot \frac{X_{\dot{m}}^2}{X_\rho} \cdot \left(k41 + k42 \cdot X_{Re}^{k43}\right)^{k52}$$

wherein k41, k42, k51, and k52 are line-specific or measuring system-specific (calibration) constants which are determined in advance for a respective measuring system, in particular by calibrating the measuring system under reference conditions, that is to say, in particular in the course of a calibration of the measuring system by the manufacturer and/or a (re)calibration of the measuring system on site; and/or

- wherein the Reynolds number value XRe satisfies a calculation rule:

$$X_{Re} = k62 \cdot \frac{X_{\dot{m}}}{X_\mu}$$

wherein coefficient k62 is line-specific or measuring system-specific (calibration) constant which is determined in advance for a respective measuring system, in particular by calibrating the measuring system under reference conditions, that is to say, in particular in the course of a calibration of the measuring system by the manufacturer and/or a (re)calibration of the measuring system on site, and which corresponds to a characteristic length A; and/or

- wherein a pressure loss coefficient value $X_\zeta$ satisfies a calculation rule:

$$X_\zeta = k41 + k42 \cdot X_{Re}^{k43}$$

wherein k41 and k42 are line-specific or measuring system-specific (calibration) constants which are determined in advance for a respective measuring system, in particular by calibrating the measuring system under reference conditions, that is to say, in particular in the course of a calibration of the measuring system by the manufacturer and/or a (re)calibration of the measuring system on site.

10. The method as claimed in one of the preceding claims, further comprising: Determining at least one velocity value $X_U$ representing a flow velocity U, in particular an average or maximum flow velocity, of the measured substance flowing in the line.

11. The method as claimed in the preceding claim,

- wherein a pressure loss coefficient value $X_\zeta$ satisfies a calculation rule:

$$X_\zeta = \frac{X_{\Delta p}}{0{,}5 \cdot X_\rho \cdot X_U^2}$$

and/or
- wherein the characterizing number value $X_V$ satisfies a calculation rule:

$$X_V = \left( \frac{X_{cp} \cdot X_\mu}{X_\lambda} \right)^a \cdot \left( k_3 \cdot \frac{X_U^2}{X_{cp}} \right)^b \cdot \left( 2 \cdot \frac{X_{\Delta p}}{X_\rho \cdot X_U^2} \right)^c$$

where k3 = 1 $K^{-1}$.

12. The method as claimed in one of the preceding claims, further comprising:

- Determining a flow index n of the measured substance flowing in the line; and/or
- Using the temperature measurement signal to determine the at least one wall temperature value $X_{Tw}$.

13. The method as claimed in one of the preceding claims, further comprising: Using a Coriolis mass flow/density meter to determine the density value $X_\rho$ and/or to determine the viscosity value $x_\mu$, and/or to determine the pressure difference value $X_{\Delta p}$.

14. The method as claimed in the preceding claim, wherein the line is part of the Coriolis mass flow/density meter.

15. The method as claimed in one of the preceding claims, further comprising: Using a differential pressure measuring device to determine the pressure difference value $X_{\Delta p}$.

16. The method as claimed in the preceding claim, wherein the line is part of the differential pressure measuring device.

17. The method as claimed in one of the preceding claims, further comprising:

- Detecting a first static pressure established in the flowing measured substance and a second static pressure established in the flowing measured substance downstream of the first in the flow direction;
- and determining the pressure difference value $X_{\Delta p}$ using the recorded first and second static pressures.

18. The method as claimed in one of the preceding claims, further comprising:

- Detecting the temperature $T_W$ of the wall, in particular a surface temperature of a hollow cylindrical segment of the wall,
- and generating a temperature measurement signal, in particular an electrical signal, following a change in said temperature $T_W$ with a change in at least one signal parameter.

19. The method as claimed in the preceding claim, further comprising: Using a temperature sensor (21) thermally coupled to an outer surface of the wall to generate the temperature measurement signal.

20. A measuring system, in particular a vibronic measuring system, adapted to carry out the method as claimed in the preceding claim, wherein said measuring system comprises:

   - The line (111),
   - the temperature sensor (21),
   - and measuring and operating electronics electrically connected to the temperature sensor, in particular formed by means of at least one microprocessor, wherein the measuring and operating electronics are set up to determine the at least one measured substance temperature value $X_{TM}$.

21. The measuring system as claimed in the preceding claim,

   - wherein the measuring and operating electronics are set up to determine the at least one wall temperature value $X_{TW}$; and/or
   - wherein the measuring and operating electronics are set up to determine the at least one characterizing number value $X_V$ for the measured substance characterizing number V.

22. The measuring system as claimed in one of the claims 20 to 22, further comprising:

   - An oscillation exciter (31) for initiating mechanical oscillations of the line (111)
   - and first and second oscillation sensors (41, 42) for detecting mechanical oscillations of the line (111) and for converting said oscillations into first and second oscillation signals (s1; s2).

23. The measuring system as claimed in the preceding claim,

   - wherein both the oscillation exciter (31) and the first and second oscillation sensors (41, 42) are electrically connected to the measuring system electronics,
   - and wherein the measuring system electronics are set up

      • to supply electrical power to the oscillation exciter (31) by means of an electrical excitation signal (e1) to cause mechanical oscillations of the line,
      • and to receive and evaluate the oscillation signals (s1, s2) of the oscillation sensors (41, 42), that is to say, in particular to digitize them and/or to determine the density value $X_\rho$ and/or the viscosity value $X_\mu$, and/or the pressure difference value $X_{\Delta p}$, and/or the mass flow value $X_m$, and/or the Reynolds number value $X_{Re}$ based on the oscillation signals (s1, s2) or based on the oscillation signals (s1, s2) and the electrical excitation signal (e1).

24. The measuring system as claimed in one of the claims 20 to 24, further comprising: First and second pressure sensors embedded in the wall of the line at a distance from each other in the flow direction to detect the pressure difference.

25. The measuring system as claimed in the preceding claim, wherein both the first pressure sensor and the second pressure sensor are electrically connected to the measuring system electronics (200) and wherein the measuring system electronics (200) are set up to determine the pressure difference value $X_{\Delta p}$, that is to say, in particular also the viscosity value $X_\mu$ and/or the velocity value $X_U$, using pressure measurement signals, in particular digital pressure measurement signals, generated using the aforementioned pressure sensors.

**Revendications**

1. Procédé destiné à la détermination d'une température de produit $T_M$, à savoir une température, notamment une température à cœur, d'un produit (FL) guidé dans une conduite (111), notamment un tube, la conduite présentant un canal intérieur entouré d'une paroi, notamment métallique, lequel procédé comprend les étapes suivantes :

   - Mise en écoulement du produit à mesurer à travers le conduite dans un sens d'écoulement prédéfini, notamment avec une vitesse d'écoulement U supérieure à 0,1 m/s ;

- Détermination d'au moins une valeur de température de paroi $X_{Tw}$ représentant une température de paroi $T_w$, à savoir une température de la paroi, notamment sur une surface de la paroi opposée au canal intérieur, sur une surface de la paroi tournée vers le canal intérieur ou de l'intérieur de la paroi ;

- Détermination d'au moins une valeur de masse volumique $X_\rho$ représentant une masse volumique $\rho$ du produit s'écoulant dans la conduite ;

- Détermination d'au moins une valeur de viscosité $X_\mu$ représentant une viscosité $\mu$, notamment une viscosité dynamique effective, du produit s'écoulant dans la conduite ;

**caractérisé en ce que** le procédé comprend en outre les étapes suivantes :

- Détermination d'au moins une valeur de conductivité thermique $X_\lambda$ représentant une conductivité thermique $\lambda$ du produit à mesurer ;

- Détermination d'au moins une valeur de capacité thermique $X_{cp}$ représentant une capacité thermique spécifique $c_p$ du produit à mesurer ;

- Détermination d'au moins une valeur de différence de pression $X_{\Delta p}$ représentant une différence de pression $\Delta p$ établie dans le sens d'écoulement à l'intérieur du produit s'écoulant dans la conduite, notamment une différence entre une première pression statique p1 établie dans le produit en écoulement et une deuxième pression statique p2 établie en aval de la première pression statique p1 dans le produit en écoulement ;

- Utilisation de l'au moins une valeur de masse volumique, de l'au moins une valeur de viscosité $X_\mu$, de l'au moins une valeur de différence de pression $X_{\Delta p}$, de l'au moins une valeur de conductivité thermique $X_\lambda$ et de l'au moins une valeur de capacité thermique $X_{cp}$ pour déterminer au moins une valeur caractéristique $X_V$ d'un indice V du produit à mesurer, lequel indice indique un échauffement provoqué par une dissipation du produit s'écoulant dans la conduite, notamment dans un volume partiel du produit en écoulement situé près de la paroi, l'indice V du produit à mesurer correspondant à une formule de calcul déterminée aussi bien par un nombre d'Eckert Ec du produit s'écoulant dans la conduite, un nombre de Prandtl Pr du produit s'écoulant dans la conduite ainsi qu'un coefficient de perte de charge $\zeta$ de la conduite que par un premier exposant a spécifique à la conduite, un deuxième exposant b spécifique à la conduite ainsi qu'un troisième exposant c spécifique à la conduite, à savoir la formule suivante :

$$V = f\left(\Delta p, \rho, \mu, \lambda, c_p\right) = Pr^a \cdot Ec^b \cdot \zeta^c$$

et

- Utilisation de l'au moins une valeur caractéristique $X_V$ ainsi que de l'au moins une valeur de température de paroi $X_{Tw}$ pour déterminer au moins une valeur de température de produit $X_{TM}$ représentant la température de produit $T_M$, notamment la température à cœur du produit à mesurer, notamment de telle sorte que la valeur de température de produit $X_{TM}$ satisfait à la formule de calcul suivante :

$$X_{TM} = X_{TW} - (k1 \cdot X_V + k2) = X_{TW} - X_{\Delta T}$$

.

2. Procédé selon l'une des revendications précédentes, pour lequel la valeur de température de produit à mesurer $X_{TM}$ satisfait à une formule de calcul, laquelle valeur dépend à la fois de la valeur caractéristique $X_V$ et de la valeur de température de paroi $X_{Tw}$ et laquelle valeur est paramétrée par un premier coefficient spécifique à la conduite k1 et un deuxième coefficient spécifique à la conduite k2, à savoir la formule suivante :

$$X_{TM} = X_{TW} - (k1 \cdot X_V + k2) = X_{TW} - X_{\Delta T}$$

.

3. Procédé selon la revendication précédente,

- pour lequel le premier coefficient k1 et le deuxième coefficient k2 sont des constantes (d'étalonnage) déterminées au préalable ; et/ou
- pour lequel le premier coefficient k1 n'est pas inférieur à 0,5 K (Kelvin) et pas supérieur à 1,5 K ; et/ou
- pour lequel le deuxième coefficient k2 n'est pas inférieur à -0,2 K et pas supérieur à 0,2 K, notamment est égal à 0.

**4.** Procédé selon l'une des revendications précédentes,

- pour lequel le premier exposant a est supérieur à 0,1 et inférieur à 0,5, notamment 0,3 ; et/ou
- pour lequel le deuxième exposant b est supérieur à 0,8 et inférieur à 1,2, notamment 1 ; et/ou
- pour lequel le troisième exposant c est supérieur à 0,8 et inférieur à 1,2, notamment 1 ; et/ou
- pour lequel le deuxième exposant b est égal au troisième exposant c, notamment égal à un.

**5.** Procédé selon l'une des revendications précédentes, pour lequel la valeur caractéristique $X_V$ satisfait à la règle de calcul suivante :

$$X_V = \left(\frac{X_{cp}}{X_\lambda} \cdot X_\mu\right)^a \cdot \left(k3 \cdot \frac{2 \cdot X_{\Delta p}}{X_\rho \cdot X_{cp}}\right)^b$$

avec $k3 = 1\ K^{-1}$.

**6.** Procédé selon la revendication précédente, pour lequel le deuxième exposant b est égal à un.

**7.** Procédé selon l'une des revendications précédentes,

- pour lequel la capacité thermique spécifique $c_p$ du produit à mesurer n'est pas inférieure à 1 kJ·kg$^{-1}$·K$^{-1}$ et pas supérieure à 5 kJ·kg$^{-1}$·K$^{-1}$ ; et/ou
- pour lequel la conductivité thermique $\lambda$ du produit à mesurer n'est pas inférieure à 0,1 W·m$^{-1}$·K$^{-1}$ et pas supérieure à 1 W·m$^{-1}$·K$^{-1}$ ; et/ou
- pour lequel la viscosité $\mu$ du produit à mesurer est supérieure à 1 mPa·s, notamment supérieure à 10 mPa·s ; et/ou
- pour lequel la masse volumique $\rho$ du produit à mesurer est supérieure à 500 kg·m$^{-3}$ et/ou inférieure à 2 000 kg·m$^{-3}$ ; et/ou
- pour lequel le produit s'écoulant dans la conduite présente une vitesse d'écoulement U, notamment moyenne ou maximale, laquelle vitesse est supérieure à 0,1 m·s$^{-1}$, notamment supérieure à 1 m·s$^{-1}$ ; et/ou
- pour lequel le produit s'écoulant dans la conduite présente un débit massique m qui est supérieur à 0,01 kg·s$^{-1}$, notamment supérieur à 0,1 kg·s$^{-1}$ ; et/ou
- pour lequel le produit s'écoulant dans la conduite présente un nombre de Reynolds Re qui est supérieur à 100, notamment supérieur à 1 000 ; et/ou
- pour lequel la valeur de masse volumique $X_\rho$ ne s'écarte pas de la (vraie) masse volumique $\rho$ du produit à mesurer de plus de 0,5 % de la masse volumique $\rho$ < 0,5 %), notamment s'écarte de plus de 0,1 % de la masse volumique $\rho$ ($f_\rho$ > 0,1 %) ; et/ou
- pour lequel la valeur de différence de pression $X_{\Delta p}$ ne s'écarte pas de la (vraie) différence de pression $\Delta p$ de plus de 15 % de la différence de pression $\Delta p$ ($f_{\Delta p}$ < 15 %), notamment s'écarte de plus de 5 % de la différence de pression $\Delta p$ ($f_{\Delta p}$ > 5 %) ; et/ou
- pour lequel la valeur de viscosité $X_\mu$ ne s'écarte pas de la (vraie) viscosité du produit à mesurer de plus de 15 % de la viscosité ($f_\mu$ < 15 %), notamment s'écarte de plus de 2 % de la viscosité ($f_\mu$ > 2 %) ; et/ou
- pour lequel la valeur de conductivité thermique $X_\lambda$ ne s'écarte pas de la (vraie) conductivité thermique du produit à mesurer de plus de 50 % de la conductivité thermique $\lambda$ ($f_\lambda$ < 50 %), notamment s'écarte de plus de 5 % de la conductivité thermique $\lambda$ ($f_\lambda$ > 5 %) ; et/ou
- pour lequel la valeur de capacité thermique $X_{cp}$ ne s'écarte pas de la (vraie) capacité thermique spécifique $c_p$ du produit à mesurer de plus de 50 % de la capacité thermique spécifique $c_p$ ($f_{cp}$ < 50 %), notamment s'écarte de plus de 5 % de la capacité thermique spécifique $c_p$ ($f_{cp}$ > 5 %) ; et/ou
- pour lequel la température de paroi $T_w$ ($T_M$ < $T_w$) est supérieure, notamment de plus de 1 K, à la température $T_M$ du produit à mesurer, à savoir notamment une température à cœur du produit à mesurer ; et/ou
- pour lequel la valeur de température de produit à mesurer $X_{TM}$ est inférieure à la valeur de température de paroi $X_{Tw}$ ($X_{TM}$ < $X_{Tw}$) ; et/ou
- pour lequel la valeur de température de produit à mesurer $X_{TM}$ représente une température à cœur du produit à mesurer ; et/ou
- pour lequel la valeur de température de paroi $X_{Tw}$ représente la température $T_w$, notamment la température de surface, d'un segment cylindrique creux de la paroi ; et/ou
- pour lequel, pour déterminer au moins la valeur de température de paroi $X_{Tw}$, on mesure une température de surface de la paroi, notamment sur un segment cylindrique creux de la paroi ; et/ou
- pour lequel la paroi de la conduite est constituée de métal, notamment d'un acier, d'un alliage de titane, d'un alliage de tantale ou d'un alliage de zirconium ; et/ou
- pour lequel la paroi de la conduite présente une épaisseur de paroi qui n'est pas inférieure à 0,5 mm, notamment supérieure à 1 mm, et/ou qui n'est pas supérieure à 5 mm, notamment inférieure à 3 mm ; et/ou
- pour lequel la conduite est mise en vibration pour déterminer la valeur de masse volumique et/ou pour déterminer la valeur de viscosité et/ou pour déterminer la valeur de différence de pression $X_{\Delta p}$, notamment excitée activement en vibrations mécaniques au moyen d'un excitateur de vibrations électromécanique d'un débitmètre massique / densimètre Coriolis.

8. Procédé selon l'une des revendications précédentes, lequel procédé comprend en outre les étapes suivantes :

- Détermination d'au moins une valeur de débit massique $X_m$ représentant un débit massique m du produit s'écoulant dans la conduite ; ainsi que
- Détermination d'au moins une valeur de nombre de Reynolds $X_{Re}$ représentant un nombre de Reynolds Re du produit s'écoulant dans la conduite.

9. Procédé selon la revendication précédente,

- pour lequel la valeur de différence de pression $X_{\Delta p}$ satisfait à la règle de calcul suivante :

$$X_{\Delta p} = k51 \cdot \frac{X_{\dot{m}}^2}{X_\rho} \cdot \left( k41 + k42 \cdot X_{Re}^{k43} \right)^{k52}$$

k41, k42, k51 et k52 étant des constantes (d'étalonnage) spécifiques à la conduite ou au système de mesure, lesquelles constantes sont déterminées au préalable pour un système de mesure respectif, notamment par étalonnage du système de mesure dans des conditions de référence, notamment au cours d'un étalonnage du système de mesure chez le fabricant et/ou d'un (ré)étalonnage du système de mesure sur place ; et/ou
- pour lequel la valeur de nombre de Reynolds $X_{Re}$ satisfait à la règle de calcul suivante :

$$X_{Re} = k62 \cdot \frac{X_{\dot{m}}}{X_\mu}$$

le coefficient k62 étant une constante (d'étalonnage) spécifique à la conduite ou au système de mesure, laquelle constante est déterminée au préalable pour un système de mesure respectif, notamment par étalonnage du système de mesure dans des conditions de référence, notamment au cours d'un étalonnage du système de mesure chez le fabricant et/ou d'un (ré)étalonnage du système de mesure sur place, et laquelle correspond à une longueur caractéristique A ; et/ou
- pour lequel une valeur de coefficient de perte de charge $X_\zeta$ satisfait à la règle de calcul suivante :

$$X_\zeta = k41 + k42 \cdot X_{Re}^{k43}$$

k41 et k42 étant des constantes (d'étalonnage) spécifiques à la conduite ou au système de mesure, lesquelles constantes sont déterminées au préalable pour un système de mesure respectif, notamment par étalonnage du système de mesure dans des conditions de référence, notamment à savoir au cours d'un étalonnage du système de mesure chez le fabricant et/ou d'un (ré)étalonnage du système de mesure sur place.

10. Procédé selon l'une des revendications précédentes, lequel procédé comprend en outre l'étape suivante : Détermination d'au moins une valeur de vitesse $X_U$ représentant une vitesse d'écoulement U, notamment moyenne ou maximale, du produit s'écoulant dans la conduite.

11. Procédé selon la revendication précédente,

- pour lequel une valeur de coefficient de perte de charge $X_\zeta$ satisfait à la règle de calcul suivante :

$$X_\zeta = \frac{X_{\Delta p}}{0,5 \cdot X_\rho \cdot X_U^2}$$

et/ou

- pour lequel la valeur caractéristique $X_V$ satisfait à la règle de calcul suivante :

$$X_V = \left(\frac{X_{cp} \cdot X_\mu}{X_\lambda}\right)^a \cdot \left(k_3 \cdot \frac{X_U^2}{X_{cp}}\right)^b \cdot \left(2 \cdot \frac{X_{\Delta p}}{X_\rho \cdot X_U^2}\right)^c ,$$

avec k3 = 1 K$^{-1}$.

12. Procédé selon l'une des revendications précédentes, lequel procédé comprend en outre les étapes suivantes :

- Détermination d'un indice d'écoulement n du produit à mesurer s'écoulant dans la conduite ; et/ou
- Utilisation du signal de mesure de température pour déterminer l'au moins une valeur de température de paroi $X_{Tw}$.

13. Procédé selon l'une des revendications précédentes, lequel procédé comprend en outre l'étape suivante : Utilisation d'un débitmètre massique / densimètre Coriolis destiné à déterminer la valeur de masse volumique $X_\rho$ et/ou à déterminer la valeur de viscosité $X_\mu$ et/ou à déterminer la valeur de différence de pression $X_{\Delta p}$.

14. Procédé selon la revendication précédente, pour lequel la conduite fait partie intégrante du débitmètre massique / densimètre Coriolis.

15. Procédé selon l'une des revendications précédentes, lequel procédé comprend en outre l'étape suivante : Utilisation d'un capteur de pression différentielle pour déterminer la valeur de différence de pression $X_{\Delta p}$.

16. Procédé selon la revendication précédente, pour lequel la conduite fait partie intégrante du capteur de pression différentielle.

17. Procédé selon l'une des revendications précédentes, lequel procédé comprend en outre les étapes suivantes :

- Mesure d'une première pression statique établie dans le produit en écoulement ainsi que d'une deuxième pression statique établie en aval de ladite première pression dans le produit en écoulement ; et
- Détermination de la valeur de différence de pression $X_{\Delta p}$ à l'aide des première et deuxième pressions statiques mesurées.

18. Procédé selon l'une des revendications précédentes, lequel procédé comprend en outre les étapes suivantes :

- Mesure de la température $T_w$ de la paroi, notamment d'une température de surface d'un segment cylindrique creux de la paroi, et
- Génération d'un signal de mesure de température, notamment électrique, suivant une variation de la même température $T_w$ avec une variation d'au moins un paramètre de signal.

19. Procédé selon la revendication précédente, lequel procédé comprend en outre l'étape suivante : Utilisation d'un capteur de température (21) couplé thermiquement à une surface d'enveloppe de la paroi, lequel capteur est destiné à générer le signal de mesure de température.

20. Système de mesure, notamment un système de mesure vibronique, lequel système est conçu pour la réalisation du procédé selon la revendication précédente, lequel système de mesure comprend :

- la conduite (111),
- le capteur de température (21)
- ainsi qu'une électronique de mesure et de fonctionnement raccordée électriquement au capteur de température, notamment formée au moyen d'au moins un microprocesseur, l'électronique de mesure et de fonctionnement étant conçue pour déterminer l'au moins une valeur de température $X_{TM}$ du produit à mesurer.

21. Système de mesure selon la revendication,

- pour lequel l'électronique de mesure et de fonctionnement est conçue pour déterminer l'au moins une valeur de température de paroi $X_{Tw}$ ; et/ou
- pour lequel l'électronique de mesure et de fonctionnement est conçue pour déterminer l'au moins une valeur caractéristique $X_V$ pour l'indice V du produit à mesurer.

22. Système de mesure selon l'une des revendications 20 à 22, lequel système comprend en outre :

- un excitateur de vibrations (31) destiné à générer des vibrations mécaniques de la conduite (111)
- ainsi que des premier et deuxième capteurs de vibrations (41, 42) destinés à détecter les vibrations mécaniques de la conduite (111) et à convertir lesdites vibrations en des premier ou deuxième signaux de vibration (s1, s2).

23. Système de mesure selon la revendication,

- pour lequel aussi bien l'excitateur de vibrations (31) que les premier et deuxième capteurs de vibrations (41, 42) sont raccordés électriquement à l'électronique de système de mesure, et
- pour lequel l'électronique de système de mesure est conçue

-- pour injecter dans l'excitateur de vibrations (31), au moyen d'un signal d'excitation électrique (e1), une puissance électrique servant à provoquer des vibrations mécaniques de la conduite,
-- ainsi que pour recevoir et évaluer les signaux de vibration (s1, s2) des capteurs de vibrations (41, 42), notamment pour les numériser et/ou pour déterminer, à l'aide des signaux de vibration (s1, s2) ou à l'aide des signaux de vibration (s1, s2) ainsi que du signal d'excitation électrique (e1), la valeur de masse volumique $X_\rho$ et/ou la valeur de viscosité $X_\mu$ et/ou la valeur de différence de pression $X_{\Delta p}$ et/ou la valeur de débit massique $X_m$ et/ou la valeur de nombre de Reynolds $X_{Re}$.

24. Système de mesure selon l'une des revendications 20 à 24, lequel système comprend en outre : des premier et deuxième capteurs de pression encastrés dans la paroi de la conduite, espacés l'un de l'autre dans le sens de l'écoulement, lesquels capteurs sont destinés à mesurer la différence de pression.

25. Système de mesure selon la revendication précédente, pour lequel aussi bien le premier capteur de pression que le deuxième capteur de pression sont raccordés électriquement à l'électronique de système de mesure (200), et pour lequel l'électronique de système de mesure (200) est conçue de manière à déterminer la valeur de différence de pression $X_{\Delta p}$, notamment également la valeur de viscosité $X_\mu$ et/ou la valeur de vitesse $X_U$, en utilisant des signaux de mesure de pression, notamment numériques, lesquels sont générés au moyen des capteurs de pression mentionnés ci-dessus.

Fig. 1

*Fig. 2*

Fig. 3

EP 4 189 346 B1

$$\rho$$
$$\mu$$
$$\lambda$$
$$c_p$$

**20**

$$X_{Tw}, X_{\Delta p}, X_{\rho}, X_{\mu}, X_{\lambda}, X_{cp} \rightarrow X_V \rightarrow \boxed{X_{TM}}$$

21

51

p1

$$T_W$$

p2

52

$$\Delta P$$

$$T_M$$

FL

111

FL

***Fig. 4***

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170074701 A
- US 20170074730 A
- WO 2017131546 A
- WO 2015099933 A
- DE 102018132672 A
- EP 919793 A
- US 20080127745 A
- US 20080115577 A
- US 20110113896 A
- US 4768384 A
- US 7040179 B
- WO 9508758 A
- WO 0102816 A
- WO 2009051588 A
- WO 2009134268 A
- WO 2012018323 A
- WO 2012033504 A
- WO 2012067608 A
- WO 2012115639 A
- US 65133393 B
- US 6651513 B
- US 7017242 B
- US 7406878 B
- US 8757007 B
- US 8671776 B
- US 8924165 B